# EUROPEAN PATENT SPECIFICATION

(11) **EP 4 501 525 B1**
(45) Date of publication and mention of the grant of the patent: **02.09.2026**
(21) Application number: 23775089.8
(22) Date of filing: 24.03.2023
(51) Int. Cl.: B23K 26/38, B23K 26/70, G05B 19/4093

(54) **LASER PROCESSING PATH LAYING-OUT METHOD, LASER PROCESSING METHOD, AND LASER PROCESSING PATH LAYING-OUT DEVICE**
VERFAHREN ZUR PLANUNG VON LASERBEARBEITUNGSPFADEN, LASERBEARBEITUNGSVERFAHREN, UND VORRICHTUNG ZUR PLANUNG VON LASERBEARBEITUNGSPFADEN
PROCÉDÉ D'ATTRIBUTION DE TRAJET D'USINAGE LASER, PROCÉDÉ D'USINAGE LASER, ET DISPOSITIF D'ATTRIBUTION DE TRAJET D'USINAGE LASER

(30) Priority: 25.03.2022 JP 2022050396; 17.03.2023 JP 2023043307
(43) Date of publication of application: 05.02.2025
(73) Proprietor: Amada Co., Ltd., Isehara-shi, Kanagawa 259-1196 (JP)
(72) Inventor: MURAKAMI Takuya, Isehara-shi, Kanagawa 259-1196 (JP); SUBBAIAH Sivakumar, Isehara-shi, Kanagawa 259-1196 (JP); KIKKAWA Noboru, Isehara-shi, Kanagawa 259-1196 (JP)
(74) Representative: Grünecker Patent- und Rechtsanwälte PartG mbB
(86) International application number: PCT/JP2023/011818
(87) International publication number: WO 2023/182496

(56) References cited:
- JP-A- 2013 176 807
- JP-A- 2015 085 330
- JP-A- 2021 154 337
- JP-A- 2021 157 425
- JP-A- H01 237 801
- JP-A- H05 104 270
- US-A1- 2003 222 058
- US-A1- 2020 001 401
- US-A1- 2022 032 401
- J.-Y. JUNG ET AL: "FEATURE-BASED NONCUTTING TOOL PATH SELECTION", JOURNAL OF MANUFACTURING SYSTEMS, SOCIETY OF MANUFACTURING ENGINEERS, DEARBORN, MI, US, vol. 13, no. 3, 1 January 1994 (1994-01-01), pages 165 - 176, XP000458453, ISSN: 0278-6125

## Description

The present invention relates to a laser processing path laying-out method, a laser processing method, and a laser processing path laying-out device, see claims 1, 6 and 10.

### [BACKGROUND ART]

Patent Literature 1 points out that, when a product that has been cut out from a workpiece by laser processing and separated from a skeleton being a workpiece offcut is supported by a skid in an inclined manner, a problem rises at the time of taking out the product.
Further examples related to laser processing of workpieces are disclosed in JP H01 237801 A (describing the preamble of claims 1, 6 and 10 respectively), and US 2022/032401 A1. The publication J.-Y. JUNG ET AL: "FEATURE-BASED NONCUTTING TOOL PATH SELECTION", JOURNAL OF MANUFACTURING SYSTEMS, SOCIETY OF MANUFACTURING ENGINEERS, DEARBORN, MI, US, vol. 13, no. 3, 1 January 1994, pages 165-176, XP000458453, ISSN: 0278-6125 relates to automatically generating non-cutting tool paths.

### [Citation List]

### [Patent Literature]

[Patent Literature 1] Japanese Unexamined Patent Application Publication No. 2020-163436

### [SUMMARY OF INVENTION]

In a case in which a product includes a notch, when a workpiece is subjected to processing of cutting off the notch, a scrap that has been cut off from the workpiece on the inner side of the notch may be caught between skids without dropping through a gap between the skids. When the scrap caught between the skids rises higher than the workpiece, a processing head configured to move above the workpiece at the time of cutting an outer peripheral end portion of the workpiece other than the notch may interfere with the scrap. It is desired to suppress interference between a processing head and a scrap produced by cutting off a notch.

This object is solved by the present invention, which is defined in independent claims 1, 6 and 10. Preferred embodiments are defined in the dependent claims.

According to the present invention, the notch is not cut off from the workpiece when a processing head moves above the workpiece to cut the outer peripheral end portion of the product, and hence the scrap produced by cutting off the notch is not caught between skids to rise higher than the workpiece. Thus, the processing head does not interfere with the scrap produced by cutting off the notch.

In accordance with the laser processing path laying-out method, the laser processing method, and the laser processing path laying-out device according to the present invention, it is possible to suppress interference between a processing head and a scrap of a workpiece during laser processing of a product including a notch.

### [BRIEF DESCRIPTION OF DRAWINGS]

[FIG. 1] FIG. 1 is a diagram illustrating an overall configuration example of a laser processing system including a laser processing path laying-out device configured to execute a laser processing path laying-out method according to one or more embodiments.
[FIG. 2] FIG. 2 illustrates a laser processing path laying-out method of a comparative example, and is a view illustrating an example of a laser processing path to be laid out to a workpiece when a product including a notch at its outer peripheral end portion is cut out from the workpiece after a scrap of an inner side of the notch is cut off from the workpiece.
[FIG. 3] FIG. 3 is a plan view illustrating an example of a product to be cut out from the workpiece by a laser processing machine illustrated in FIG. 1.
[FIG. 4A] FIG. 4A is a view illustrating an example of an open path to be laid out in a part of the notch of the product when the laser processing path laying-out device according to one or more embodiments selects type 1 as a pattern of the laser processing path.
[FIG. 4B] FIG. 4B is a view illustrating an example of an outer peripheral path that is to be laid out to the workpiece and is obtained by coupling a line segment that closes the open path of the part of the notch and a line segment of the outer peripheral end portion of the product, when the laser processing path laying-out device according to one or more embodiments selects type 1.
[FIG. 5] FIG. 5 is a view illustrating a laser processing path to be laid out to the workpiece to cut out the product illustrated in FIG. 3 from the workpiece, when the laser processing path laying-out device according to one or more embodiments selects type 1 as the pattern of the laser processing path.
[FIG. 6A] FIG. 6A is a view illustrating an example of a path that is to be laid out to the workpiece and is obtained by coupling the open path of the part of the notch and the line segment of the outer peripheral end portion of the product, when the laser processing path laying-out device according to one or more embodiments selects type 2 as a pattern of the laser processing path.
[FIG. 6B] FIG. 6B is a view illustrating an example of an outer peripheral path that is to be laid out to the workpiece and is obtained by coupling the line segment of the outer peripheral end portion of the product and a line segment that closes the open path of the part of the notch, when the laser processing path laying-out device according to one or more embodiments selects type 2.
[FIG. 7] FIG. 7 is a view illustrating a laser processing path to be laid out to the workpiece to cut out the product illustrated in FIG. 3 from the workpiece when the laser processing path laying-out device according to one or more embodiments selects type 2.
[FIG. 8] FIG. 8 is a view illustrating a laser processing path to be laid out to the workpiece to cut out a product including one notch at its outer peripheral end portion from the workpiece when the laser processing path laying-out device according to one or more embodiments selects type 2.
[FIG. 9] FIG. 9 is a view illustrating a laser processing path to be laid out to the workpiece to cut out the product illustrated in FIG. 3 from the workpiece when the laser processing path laying-out device according to one or more embodiments selects type 3 as a pattern of the laser processing path.
[FIG. 10A] FIG. 10A is a view illustrating an example of a setting image for setting a processing condition of a product, which is displayed on a touch panel of an operation pendant of FIG. 1.
[FIG. 10B] FIG. 10B is a view illustrating a state of setting a depth and a width of the notch in the example of the setting image for setting the processing condition of the product, which is displayed on the touch panel of the operation pendant of FIG. 1.
[FIG. 11A] FIG. 11A is a view illustrating a position of the line segment that is laid out to the notch and closes the open path, when corner portions of the notch have a non-chamfered edge shape and line segments sandwiching the notch are present on one straight line.
[FIG. 11B] FIG. 11B is a view illustrating a position of the line segment that is laid out to the notch and closes the open path, when the corner portions of the notch have a non-chamfered edge shape, the line segments sandwiching the notch are absent on one straight line, and the right line segment is farther from a bottom portion of the notch than the left line segment.
[FIG. 11C] FIG. 11C is a view illustrating a position of the line segment that is laid out to the notch and closes the open path, when the corner portions of the notch have a non-chamfered edge shape, the line segments sandwiching the notch are absent on one straight line, and the left line segment is farther from the bottom portion of the notch than the right line segment.
[FIG. 12] FIG. 12 is an explanatory view illustrating a condition of changing the position of the line segment that is laid out to the notch and closes the open path, when the corner portions of the notch have a non-chamfered edge shape.
[FIG. 13A] FIG. 13A is a view illustrating a state obtained by changing the position of the line segment that is laid out to the notch and closes the open path, when the corner portions of the notch have a non-chamfered edge shape, the line segments sandwiching the notch are absent on one straight line, and the right line segment is farther from the bottom portion of the notch than the left line segment.
[FIG. 13B] FIG. 13B is a view illustrating a state obtained by changing the position of the line segment that is laid out to the notch and closes the open path, when the corner portions of the notch have a non-chamfered edge shape, the line segments sandwiching the notch are absent on one straight line, and the left line segment is farther from the bottom portion of the notch than the right line segment.
[FIG. 14A] FIG. 14A is a view illustrating the position of the line segment that is laid out to the notch and closes the open path, when the corner portions of the notch have a C-chamfered shape and the line segments sandwiching the notch are present on one straight line.
[FIG. 14B] FIG. 14B is a view illustrating the position of the line segment that is laid out to the notch and closes the open path, when the corner portions of the notch have a C-chamfered shape, the line segments sandwiching the notch are absent on one straight line, and the right line segment is farther from the bottom portion of the notch than the left line segment.
[FIG. 14C] FIG. 14C is a view illustrating the position of the line segment that is laid out to the notch and closes the open path, when the corner portions of the notch have a C-chamfered shape, the line segments sandwiching the notch are absent on one straight line, and the left line segment is farther from the bottom portion of the notch than the right line segment.
[FIG. 15A] FIG. 15A is a view illustrating a state obtained by changing the position of the line segment that is laid out to the notch and closes the open path, when the corner portions of the notch have a C-chamfered shape, the line segments sandwiching the notch are absent on one straight line, and the right line segment is farther from the bottom portion of the notch than the left line segment.
[FIG. 15B] FIG. 15B is a view illustrating a state obtained by changing the position of the line segment that is laid out to the notch and closes the open path, when the corner portions of the notch have a C-chamfered shape, the line segments sandwiching the notch are absent on one straight line, and the left line segment is farther from the bottom portion of the notch than the right line segment.
[FIG. 16A] FIG. 16A is a view illustrating the position of the line segment that is laid out to the notch and closes the open path, when the corner portions of the notch are rounded and the line segments sandwiching the notch are present on one straight line.
[FIG. 16B] FIG. 16B is a view illustrating the position of the line segment that is laid out to the notch and closes the open path, when the corner portions of the notch are rounded, the line segments sandwiching the notch are absent on one straight line, and the right line segment is farther from the bottom portion of the notch than the left line segment.
[FIG. 16C] FIG. 16C is a view illustrating the position of the line segment that is laid out to the notch and closes the open path, when the corner portions of the notch are rounded, the line segments sandwiching the notch are absent on one straight line, and the left line segment is farther from the bottom portion of the notch than the right line segment.
[FIG. 17A] FIG. 17A is a view illustrating preferred directions of an approach and a lead-out of the open path illustrated in FIG. 11A.
[FIG. 17B] FIG. 17B is a view illustrating preferred directions of an approach and a lead-out of the open path illustrated in FIG. 14A.
[FIG. 17C] FIG. 17C is a view illustrating preferred directions of an approach and a lead-out of the open path illustrated in FIG. 16A.
[FIG. 18] FIG. 18 is a view illustrating an example of a state in which a part image indicating a product is displayed on a display for manual laid-out of the laser processing path.
[FIG. 19] FIG. 19 is a view illustrating an example of a part editing image displayed on the display.
[FIG. 20A] FIG. 20A is a view illustrating open paths laid out to notches selected in the part image illustrated in FIG. 18.
[FIG. 20B] FIG. 20B is a view illustrating the confirmed open paths laid out to the notches selected in the part image illustrated in FIG. 18.
[FIG. 21A] FIG. 21A is a partial flow chart illustrating an example of processing of laying out, by a computing device, a laser processing path to a workpiece through automatic lay-out.
[FIG. 21B] FIG. 21B is a partial flow chart subsequent to FIG. 21A, which illustrates the example of the processing of laying out, by the computing device, the laser processing path to the workpiece through the automatic lay-out.
[FIG. 22] FIG. 22 is a flow chart illustrating an example of processing of laying out, by the computing device, a laser processing path to a workpiece through manual lay-out.
[FIG. 23] FIG. 23 is a flow chart illustrating an example of processing performed by an NC device controlling the laser processing machine to cut out a product from the workpiece.

### [DESCRIPTION OF EMBODIMENTS]

One or more embodiments are hereinafter described with reference to the accompanying drawings. The same or equivalent parts or components are denoted by the same reference symbols throughout the drawings.

One or more embodiments described below exemplify a device or the like for embodying the technical idea of the present invention. The technical idea of the present invention is not limited to materials, shapes, structures, layouts, functions, or the like of respective components described below.

### [Configuration of Laser Processing System]

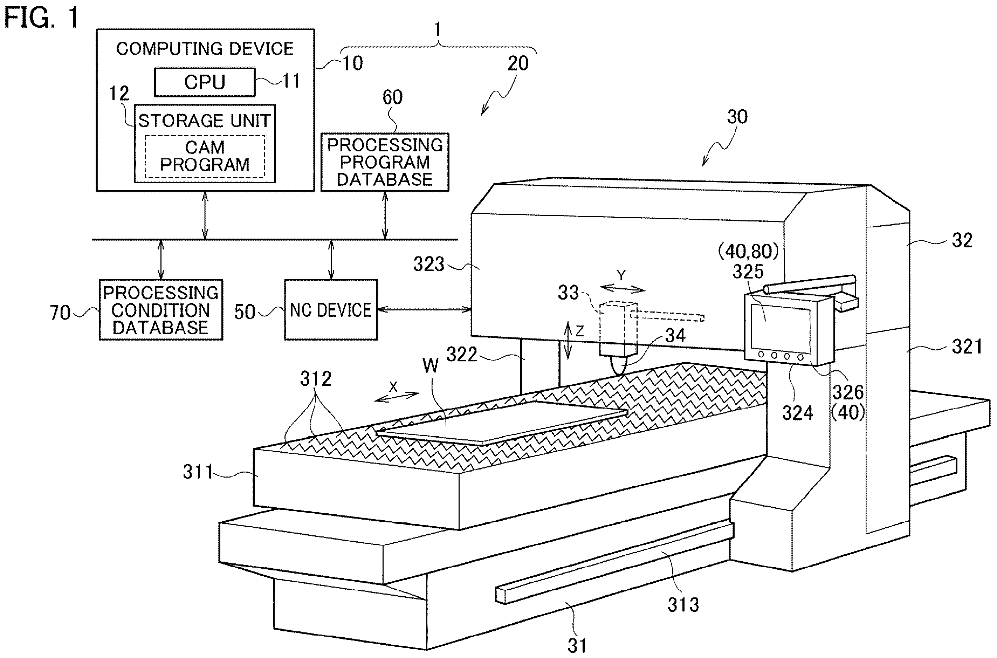

FIG. 1 illustrates an overall configuration example of a laser processing system 1 including a laser processing path laying-out device configured to execute a laser processing path laying-out method according to one or more embodiments. As illustrated in FIG. 1, the laser processing system 1 includes a computing device 10 and a laser processing machine 20. The laser processing path laying-out device according to one or more embodiments can be configured of the computing device 10. A laser processing method according to one or more embodiments is executed by the laser processing machine 20 cutting out a product from a sheet-shaped workpiece W by laser processing along a laser processing path laid out by the computing device 10. Typically, the workpiece W is a sheet metal. The product may be a part.

The laser processing machine 20 includes a processing machine main body 30, an operation unit 40, a numerical control (NC) device 50, a processing program database 60, a processing condition database 70, and a display 80. The NC device 50 is an example of a control unit configured to control each unit of the laser processing machine 20. The NC device 50 may be connected to the processing program database 60 and the processing condition database 70 via a network. The processing program database 60 and the processing condition database 70 may be configurations outside of the laser processing machine 20.

The processing machine main body 30 includes a base 31, a frame 32, a carriage 33, and a processing head 34.

A table 311 for placing the workpiece W is provided on the base 31. In the table 311, a plurality of rows of skids 312 formed of, for example, iron sheets are arranged. On an upper end portion of the skid 312, a plurality of triangular protrusions are formed side by side. The workpiece W on the table 311 is supported by the plurality of protrusions of the skids 312. Rails 313 extending in a longitudinal direction X of the table 311 are each provided on both side surfaces of the base 31.

The frame 32 is formed of a gate type straddling the table 311, and includes side frames 321 and 322 and an upper frame 323. The side frames 321 and 322 are configured to be slidable on the rails 313 of the base 31. The frame 32 can move in the longitudinal direction X of the table 311 with respect to the base 31 while being guided by the rails 313.

An operation pendant 324 connected to the NC device 50 is mounted on the side frame 321. The operation pendant 324 includes a touch panel 325 and an operation key unit 326. The touch panel 325 can be configured by combining a liquid crystal panel and a touch pad, for example.

The carriage 33 is provided in the upper frame 323. The carriage 33 is slidable in a width direction Y of the frame 32 orthogonal to the longitudinal direction X of the table 311. On the carriage 33, the processing head 34 configured to output a laser beam and an assist gas is supported so as to be slidable in a raising/lowering direction Z orthogonal to the longitudinal direction X of the table 311 and the width direction Y of the frame 32.

The operation unit 40 and the display 80 are a user interface for presenting, to an operator, input of a processing condition that is required to be input to the NC device 50 when the workpiece W is cut and processed and setting values of the laser processing machine 20 determined based on the input processing condition.

The operation unit 40 can be configured of the touch pad of the touch panel 325 and the operation key unit 326, for example. When the operator touches and operates, on the touch pad, a key or the like displayed on the liquid crystal panel, or when the operator operates the operation key unit 326, the operator can input information to the NC device 50. The display 80 can be configured of the liquid crystal panel of the touch panel 325, for example. The liquid crystal panel can display various types of information.

The processing program database 60 stores a processing program for causing the NC device 50 to operate each configuration of the laser processing machine 20. The processing program includes program codes for defining a procedure of the operation of the laser processing machine 20.

The processing condition database 70 stores a plurality of processing condition files in which a plurality of parameters required when the workpiece W is cut and processed are registered. The processing condition file is a file for defining each parameter in the processing program.

The NC device 50 reads out the processing program from the processing program database 60, and selects any one of the plurality of processing conditions stored in the processing condition database 70. The NC device 50 controls the laser processing machine 20 so as to process the workpiece W based on the read-out processing program and the selected processing condition.

The configuration and the operation of the computing device 10 are described in detail. The computing device 10 includes a central processing unit (hereinafter abbreviated as "CPU") 11 and a storage unit 12 that stores a computer aided manufacturing (CAM) program. The storage unit 12 is a non-transitory storage medium. The computing device 10 is a CAM apparatus configured to execute a CAM program. The CAM program stored in the storage unit 12 is a laser processing path laying-out program for laying out, to nesting data, a laser processing path for cutting out a product from the workpiece W by laser processing.

An unillustrated computing device configured to execute a computer aided design (CAD) program creates nesting data formed of CAD data in which a shape of one or more products to be cut out from the workpiece W is disposed in a shape indicating the workpiece W. The computing device configured to execute the CAD program is a CAD apparatus. The nesting data created by the CAD apparatus is input to the computing device 10. The computing device 10 may be a CAD/CAM apparatus also serving as the computing device configured to execute the CAD program.

The CPU 11 executes the CAM program stored in the storage unit 12 to lay out the laser processing path to the input nesting data. The computing device 10 creates a processing program for cutting out, by a laser beam output from the processing head 34, one or more products from the workpiece W on the skid 312 in accordance with the laid-out laser processing path. The computing device 10 causes the processing program database 60 to store the processing program.

Strictly speaking, the computing device 10 lays out the laser processing path to the nesting data, but, in the following, the computing device 10 is sometimes described to lay out the laser processing path to the workpiece W, the product, or a line segment on the product.

### [Laser Processing Path Laying-Out Method of Comparative Example]

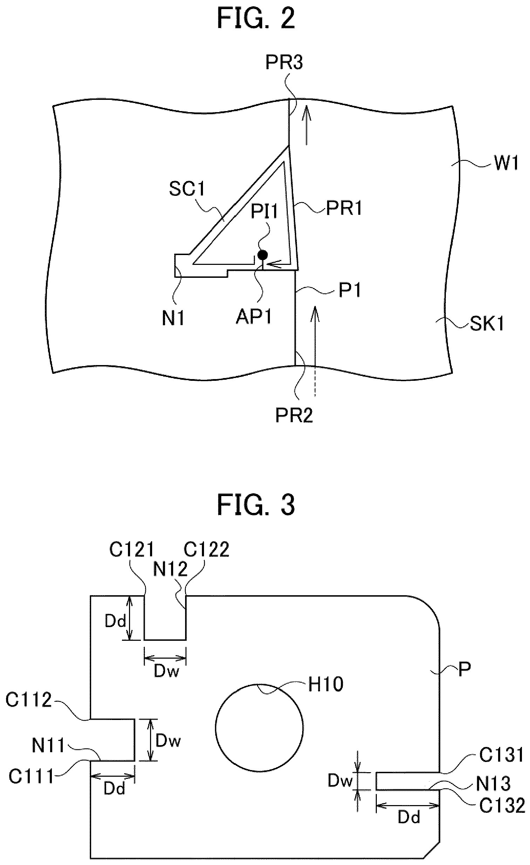

Before the laser processing path laying-out method according to one or more embodiments is described, a laser processing path laying-out method according to a comparative example is described with reference to FIG. 2. FIG. 2 illustrates an example of a laser processing path to be laid out to a workpiece W1 when a product P1 including a notch N1 at its outer peripheral end portion is cut out from the workpiece W1 after a scrap of an inner side of the notch N1 is cut off from the workpiece W1. In this case, the notch N1 has a triangular shape, but the notch N1 may have a rectangular shape.

In FIG. 2, when the product P1 including the notch N1 is to be cut out from the workpiece W1, the computing device 10 lays out, to the workpiece W1, a processing path PR1 starting from a pierced hole PI1 on the inner side of the notch N1 via an approach (lead-in) AP1, for cutting off a scrap SC1 of the inner side of the notch N1 from the workpiece W1. The computing device 10 lays out, to the workpiece W1, processing paths PR2 and PR3 for cutting an outer peripheral end portion of the product P1 subsequent to the processing of the notch N1 to separate the product P1 from a skeleton SK1 being an offcut of the workpiece W1.

After the processing path PR1 is subjected to laser processing, the processing paths PR2 and PR3 are subjected to laser processing. Thus, after the scrap SC1 of the inner side of the notch N1 is first cut off from the workpiece W1, the product P1 including the notch N1 at its outer peripheral end portion can be cut out from the workpiece W1.

When the scrap SC1 is cut off from the workpiece W1 by laser processing of the processing path PR1, the scrap SC1 that has been cut off may be caught between the skids 312 without dropping through a gap between the skids 312 supporting the workpiece W1. If the scrap SC1 caught between the skids 312 rises higher than the workpiece W1, when the processing head 34 passes above the notch N1 of the workpiece W1 in the next laser processing of the processing path PR2, the processing head 34 may interfere with the scrap SC1. Interference of the processing head 34 with the scrap SC1 may cause abnormal stop of the laser processing of the workpiece W1 or a processing failure.

### [Laser Processing Path Laying-Out Method According to One or More Embodiments]

FIG. 3 illustrates an example of a product P to be cut out from the workpiece W by the laser processing machine 20 of FIG. 1. The product P includes three notches N11 to N13 at its outer peripheral end portion. On the outer peripheral end portion, the notch N11 and the notch N12 are adjacent to each other, the notch N12 and the notch N13 are adjacent to each other, and the notch N13 and the notch N11 are adjacent to each other. The notches N11 to N13 each have a depth Dd and a width Dw on the inner side of the product P, from each of pairs of corner portions C111 and C112, C121 and C122, and C131 and C132 that are positioned at the outer peripheral end portion and are opposed to each other.

The notches N11 to N13 may have the same depth Dd and the same width Dw or different depths Dd and different widths Dw. In the product P illustrated in FIG. 3, the width Dw of the notch N13 is narrower than the width Dw of each of the notches N11 and N12. The notches N11 to N13 are collectively referred to as a notch N. Further, a freely-selected notch is sometimes referred to as a notch N. In the product P illustrated in FIG. 3, the notch N has a rectangular shape, but the notch N may have a triangular shape.

The computing device 10 lays out, to the nesting data, a laser processing path for cutting out the product P illustrated in FIG. 3 from the workpiece W by laser processing, in a pattern different from the laser processing path illustrated in FIG. 2. The computing device 10 can select the pattern of the laser processing path to be laid out to the nesting data at the time of cutting out the product P including the notch N at its outer peripheral end portion from the workpiece W from a plurality of types.

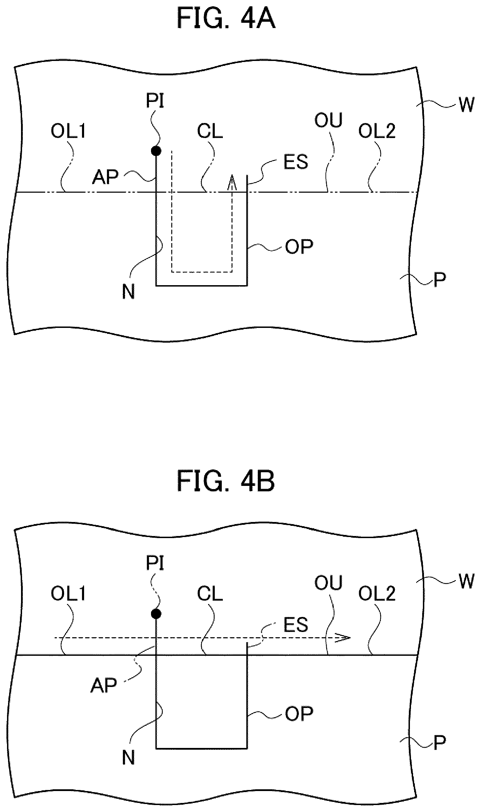

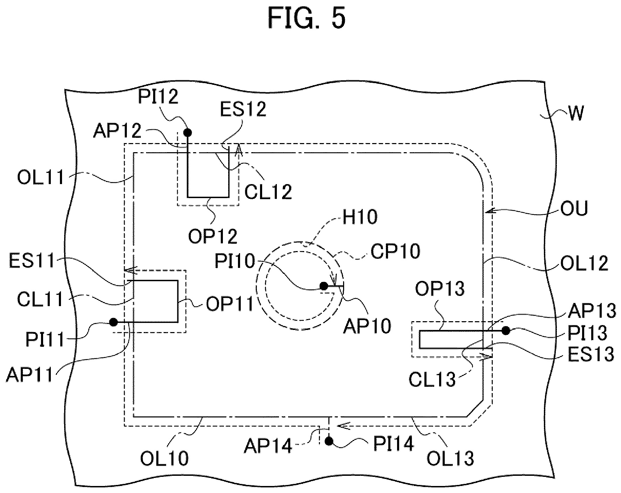

With reference to FIG. 4A, FIG. 4B, and FIG. 5, the laser processing path used when the computing device 10 selects type 1 is described. As illustrated in FIG. 4A, the computing device 10 lays out, to the nesting data, an open path OP opening toward an outer side of the product P. The open path OP is a processing path for cutting to the inner side of the product P. The phrase "the open path OP is opening toward the outer side of the product P" means that, in a notch formation processing path for forming the notch N, a line segment of a part of the notch N in the outer peripheral end portion of the product P does not have an outer peripheral processing path (first outer peripheral processing path) laid out thereto, for cutting this line segment. As described above, the computing device 10 lays out, as a partial processing path in the notch formation processing path, the open path OP excluding the line segment of the part of the notch N in the outer peripheral end portion of the product P. An outer peripheral path OU indicated by the two-dot chain line is positioned at the outer peripheral end portion of the product P.

A pierced hole PI is formed at a position on the outer side with respect to the product P of the workpiece W, and an approach (lead-in) AP is connected to the pierced hole PI. An end point of the approach AP is a start point of the open path OP. To an end point of the open path OP, a lead-out ES extending to the outer side of the product P is connected.

As illustrated in FIG. 4B, the computing device 10 lays out, as a processing path to be processed after the open path OP is processed, the outer peripheral path OU obtained by coupling a line segment CL that closes the open path OP and line segments OL1 and OL2 of the outer peripheral end portion of the product P. The line segments OL1 and OL2 are line segments sandwiching the notch N in the outer peripheral end portion. The line segment CL that closes the open path OP refers to a line segment for cutting the part of the notch N in the outer peripheral end portion. The outer peripheral path OU is obtained by coupling a first outer peripheral processing path for cutting the line segment CL of the part of the notch N in the outer peripheral end portion and a second outer peripheral processing path for cutting the outer peripheral end portion in a part other than the notch N. The first outer peripheral processing path is the remaining partial processing path in the notch formation processing path. The open path OP and the first outer peripheral processing path are the notch formation processing path for cutting off the part of the notch N. The second outer peripheral processing path is a processing path for cutting the entire outer peripheral end portion of the product P which is the part other than the notch N.

FIG. 5 illustrates a laser processing path laid out to the workpiece W based on type 1 illustrated in FIG. 4A and FIG. 4B. As illustrated in FIG. 5, the computing device 10 lays out, within the laser processing path, to respective parts of the notches N11 to N13, open paths OP11 to OP13 corresponding to the open path OP illustrated in FIG. 4A. Approaches (lead-ins) AP11 to AP13 are respectively connected to pierced holes PI11 to PI13 on the outer side with respect to the product P, and end points of the approaches AP11 to AP13 become start points of the respective open paths OP11 to OP13. End points of the open paths OP11 to OP13 are respectively connected to lead-outs ES11 to ES13 extending to the outer side of the product P. The order of cutting the open paths OP11 to OP13 is not limited, but the order is the open paths OP11, OP12, and OP13, for example.

The computing device 10 lays out, within the laser processing path, as a processing path to be processed after the open paths OP11 to OP13 are processed, to the workpiece W, the outer peripheral path OU indicated by the one-dot chain line obtained by coupling line segments CL11 to CL13 that close the open paths OP11 to OP13 and line segments OL10 to OL13 of the outer peripheral end portion of the product P. An approach (lead-in) AP14 is connected to a pierced hole PI14 on the outer side with respect to the product P, and an end point of the approach AP14 becomes a start point of the outer peripheral path OU. An end point of the outer peripheral path OU is connected to the start point of the outer peripheral path OU.

The line segments CL11 to CL13 are line segments connecting between corner portions C111 and C112, corner portions C121 and C122, and corner portions C131 and C132, respectively, illustrated in FIG. 3. The line segment OL10 is a line segment connecting between an end portion of the approach AP14 on a side opposite to the pierced hole PI14 and the corner portion C111. The line segment OL11 is a line segment connecting between the corner portion C112 and the corner portion C121. The line segment OL12 is a line segment connecting between the corner portion C122 and the corner portion C131. The line segment OL13 is a line segment connecting between the corner portion C132 and the start point of the outer peripheral path OU. The outer peripheral path OU is a continuous processing path that makes a round along the outer peripheral end portion of the product P.

The product P of FIG. 3 includes, in addition to the three notches N11 to N13, a hole H10 at its center. The computing device 10 lays out, as the laser processing path for cutting out the product P, a circling path CP10 illustrated in FIG. 5 corresponding to the hole H10. An approach (lead-in) AP10 is connected to a pierced hole PI10 inside of the hole H10, and an end point of the approach AP10 becomes a start point of the circling path CP10. The circling path CP10 makes a round along the hole H10, and an end point of the circling path CP10 is connected to the start point of the circling path CP10.

It is to be noted that the computing device 10 lays out, to the nesting data, a laser processing path such that, after the hole H10 is formed, the notches N11 to N13 are formed and the outer peripheral end portion of the product P is finally cut to cut out the product P. The product P is not required to include the hole H10, and the product P is only required to include one or more notches N at its outer peripheral end portion.

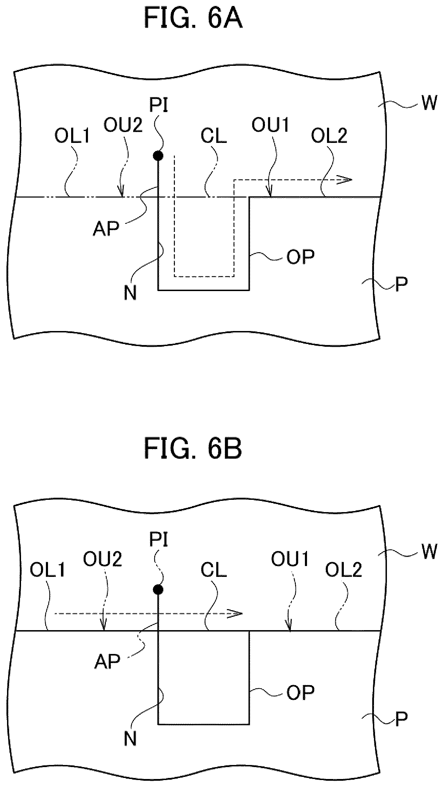

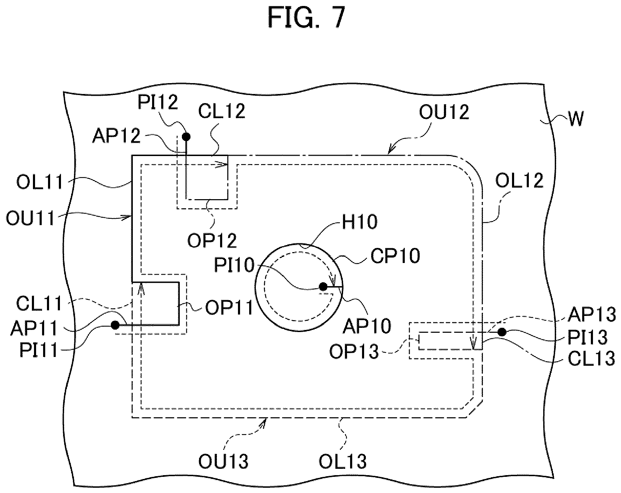

With reference to FIG. 6A, FIG. 6B, and FIG. 7, the laser processing path used when the computing device 10 selects type 2 is described. As illustrated in FIG. 6A, the computing device 10 lays out, to the nesting data, a processing path OU1 obtained by coupling the open path OP opening toward the outer side of the product P and the line segment OL2 of the outer peripheral end portion of the product P in this order. The open path OP is a partial processing path in the notch formation processing path. An approach AP is connected to a pierced hole PI on the outer side with respect to the product P, and an end point of the approach AP becomes a start point of the open path OP. The line segment OL2 is at least a part of the outer peripheral end portion of the product P in a part other than the notch N.

As illustrated in FIG. 6B, the computing device 10 lays out, as the processing path to be processed before or after the processing path OU1 is processed, to the nesting data, an outer peripheral path OU2 obtained by coupling the line segment OL1 of the outer peripheral end portion of the product P and the line segment CL that closes the open path OP in this order. The line segment OL1 is at least a part of the outer peripheral end portion of the product P other than the part of the notch N. The outer peripheral path OU2 includes the first outer peripheral processing path and the second outer peripheral processing path. The first outer peripheral processing path is the remaining partial processing path in the notch formation processing path for the notch N, and is a processing path for cutting the line segment CL of the part of the notch N in the outer peripheral end portion. The second outer peripheral processing path is a processing path for cutting at least a part of the outer peripheral end portion of the product P other than the part of the notch N.

FIG. 7 illustrates a laser processing path laid out to the workpiece W based on type 2 illustrated in FIG. 6A and FIG. 6B. How to lay out the circling path CP10 corresponding to the hole H10 is similar to that of FIG. 5. As illustrated in FIG. 7, the computing device 10 lays out, within the laser processing path, to the part of the notch N11, the outer peripheral end portion of the product P between the notches N11 and N12, and the part of the notch N12, a processing path OU11 corresponding to the processing path OU1 illustrated in FIG. 6A. The processing path OU11 is a continuous processing path obtained by coupling the open path OP11 of the part of the notch N11, a processing path for cutting the line segment OL11 connecting between the corner portion C112 and the corner portion C121 in the outer peripheral end portion, and the processing path for cutting the line segment CL12 of the part of the notch N12 in this order. The processing path OU11 is a continuous processing path connected to the approach AP11.

The computing device 10 lays out, within the laser processing path, to the part of the notch N12, the outer peripheral end portion of the product P between the notches N12 and N13, and the part of the notch N13, a processing path OU12 corresponding to the processing path OU1 illustrated in FIG. 6A. The path OU12 is a continuous processing path obtained by coupling the open path OP12 of the part of the notch N12, a processing path for cutting the line segment OL12 connecting between the corner portion C122 and the corner portion C131 in the outer peripheral end portion, and a processing path for cutting the line segment CL13 of the part of the notch N13 in this order. The processing path OU12 is a continuous processing path connected to the approach AP12.

The computing device 10 lays out, within the laser processing path, to the part of the notch N13, the outer peripheral end portion of the product P between the notches N13 and N11, and the part of the notch N11, a path OU13 corresponding to the path OU1 illustrated in FIG. 6A. The path OU13 is a continuous processing path obtained by coupling the open path OP13 of the part of the notch N13, a processing path for cutting the line segment OL13 connecting between the corner portion C132 and the corner portion C111 in the outer peripheral end portion, and a processing path for cutting the line segment CL11 of the part of the notch N11 in this order. The processing path OU13 is a continuous processing path connected to the approach AP13.

As understood from the laser processing path illustrated in FIG. 7, in a case as an example in which type 2 is selected to perform processing in the order of the notches N11, N12, and N13, the line segment CL11 in the part of the notch N11 is cut after the open path OP11 is cut. The line segments CL12 and CL13 in the parts of the notches N12 and N13 are respectively cut before the open paths OP12 and OP13 are cut.

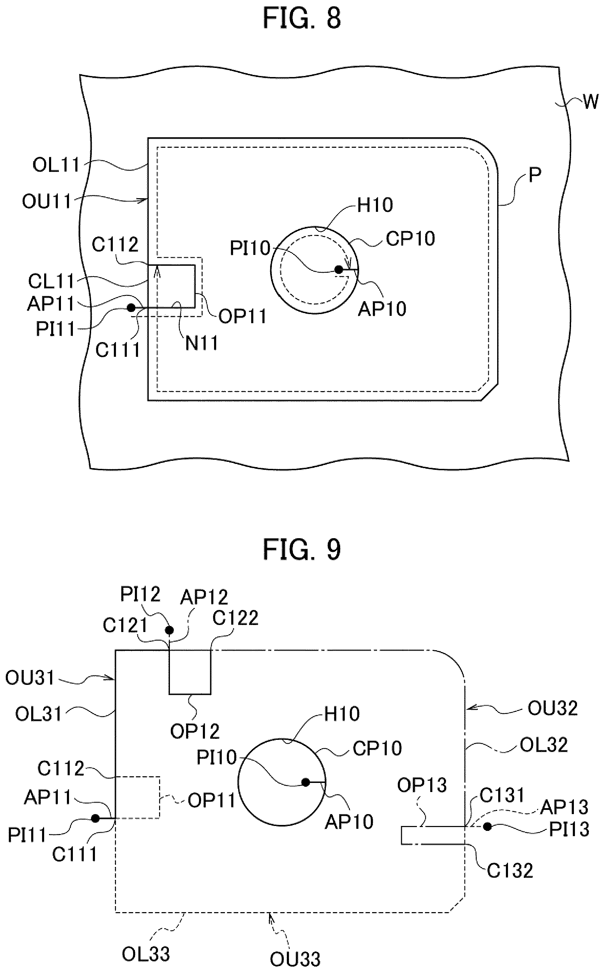

With reference to FIG. 8, a description is given of a laser processing path used when the computing device 10 selects type 2 in a case in which the product P includes only the notch N11 as the notch N of the outer peripheral end portion. The computing device 10 lays out, to the nesting data, the continuous processing path OU11 obtained by coupling the open path OP11 of the part of the notch N11 connected to the approach AP11, a processing path for cutting the line segment OL11 connecting from the corner portion C112 to the corner portion C111, which is a part other than the notch N11 in the outer peripheral end portion, and a processing path for cutting the line segment CL11 of the part of the notch N11 in this order.

The computing device 10 may lay out the laser processing path to the nesting data based on type 3 illustrated in FIG. 9. How to lay out of the circling path CP10 corresponding to the hole H10 is similar to that of FIG. 5. As illustrated in FIG. 9, the computing device 10 lays out, to the nesting data, within the laser processing path, continuously with the approach AP11 connected to the pierced hole PI11, a path OU31 indicated by the solid line obtained by coupling a processing path for cutting the line segment OL31 connecting between the corner portion C111 of the notch N11 and the corner portion C121 of the notch N12 and the open path OP12 of the part of the notch N12.

The computing device 10 lays out, to the nesting data, within the laser processing path, continuously with the approach AP12 connected to the pierced hole PI12, a path OU32 indicated by the one-dot chain line obtained by coupling a processing path for cutting a line segment OL32 connecting between the corner portion C121 of the notch N12 and the corner portion C131 of the notch N13 and the open path OP13 of the part of the notch N13. The computing device 10 lays out, to the nesting data, within the laser processing path, continuously with the approach AP13 connected to the pierced hole PI13, a path OU33 indicated by the dashed line obtained by coupling a processing path for cutting a line segment OL33 connecting between the corner portion C131 of the notch N13 and the corner portion C111 of the notch N11 and the open path OP11 of the part of the notch N11.

As understood from the laser processing path illustrated in FIG. 9, in a case as an example in which type 3 is selected to perform processing in the order of the notches N11, N12, and N13, a portion corresponding to the line segment CL11 of FIG. 7 in the part of the notch N11 is cut before the open path OP11 is cut. Portions corresponding to the line segments CL12 and CL13 of FIG. 7 in the parts of the notches N12 and N13 are respectively cut after the open paths OP12 and OP13 are cut.

When type 2 illustrated in FIG. 7 or type 3 illustrated in FIG. 9 is selected, as compared to the case in which type 1 illustrated in FIG. 5 is selected, the number of pierced holes and approaches to be formed in the workpiece W can be reduced. With type 2 illustrated in FIG. 7 or type 3 illustrated in FIG. 9, the pierced hole PI14 and the approach AP14 illustrated in FIG. 5 can be omitted.

The computing device 10 can lay out, to the nesting data, the laser processing path for cutting out a product including a notch at its outer peripheral end portion through automatic lay-out or manual lay-out. For example, the automatic lay-out can be selected through an operation on a setting image for setting a processing condition of the product, which is displayed on the touch panel 325 of the operation pendant 324 of FIG. 1.

### [Automatic Lay-Out]

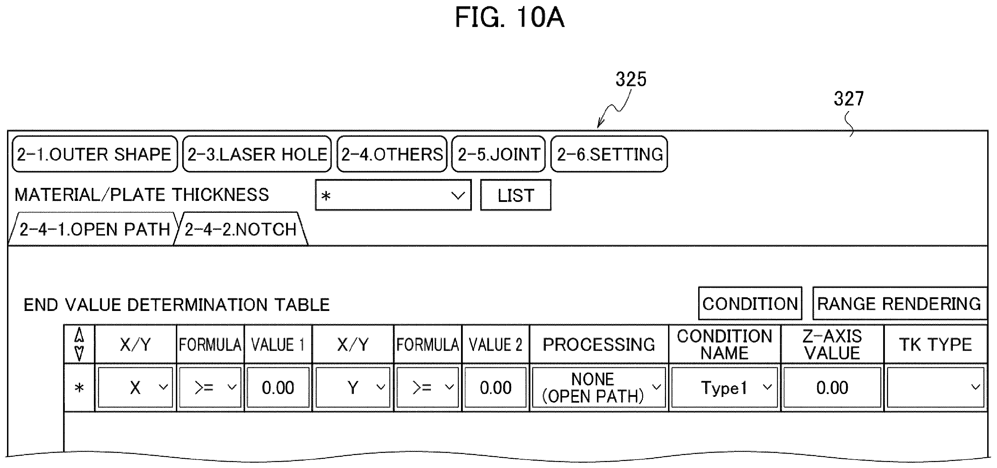

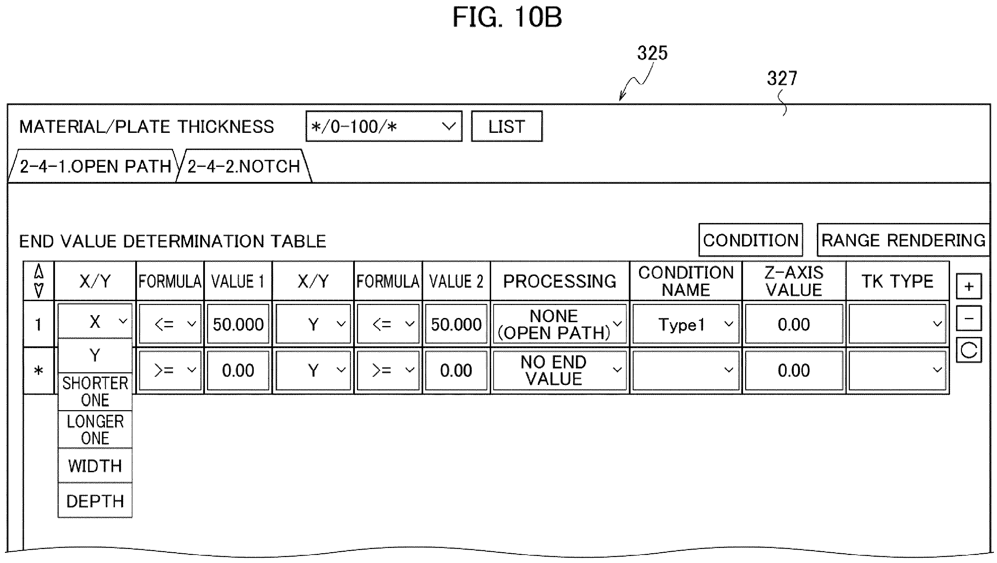

FIG. 10A and FIG. 10B illustrate a setting image for setting the processing condition of the product, which is displayed on the touch panel 325. In a setting image 327 of FIG. 10A, when "no processing (open path)" is selected in the item of "processing," it is possible to command the computing device 10 to perform lay-out through the automatic lay-out.

When the "no processing (open path)" is selected in the item of "processing" of the setting image 327, in the item of "X/Y" of the setting image 327 illustrated in FIG. 10B, any one of the depth and the width from the outer peripheral end portion, which are orthogonal to each other, of the notch of the product can be selected by a pull-down menu. The dimensions of the selected depth and width can be set in the items of "value 1" and "value 2" of the setting image 327.

For example, when the lay-out through the automatic lay-out is selected in the setting image 327 as the processing condition of the product P of FIG. 3, in the item of "X/Y" of the setting image 327, dimensions of the depth Dd and the width Dw of each of the notches N11 to N13 can be set. The dimensions of each depth Dd and each width Dw of the notches N11 to N13 can be individually set in the items of "value 1" and "value 2" of the setting image 327.

For example, in a case in which the dimensions of each of the notches N11 to N13 are attempted to be set by existing X and Y directions in the item of "X/Y" of the setting image 327, even when the notches N11 to N13 have the same shape, setting contents of the dimensions of the respective notches N11 to N13 may change depending on the directions in which the notches N11 to N13 open in the outer peripheral end portion of the product P. When it is required to set the dimensions for the notches N11 to N13 having different opening directions with different setting contents even in the case of having the same shape, it is required to consider the setting contents of the dimensions depending on the opening directions, and thus the operability is bad.

In the laser processing system 1, the dimensions of the notches N11 to N13 are set by the depth Dd and the width Dw. Thus, even when the directions in which the notches N11 to N13 open with respect to the outer peripheral end portion of the product P are different, the dimensions can be set with the same setting content as long as the notches N11 to N13 have the same shape.

In the laser processing system 1, the computing device 10 can select a pattern for laying out the laser processing path to the nesting data from a plurality of types. The laser processing system 1 may select any type from type 1 and type 2, or may select any type from types 1 to 3. When "no processing (open path)" is selected in the item of "processing" of the setting image 327, the type can be selected in the item of "condition name." In FIG. 10A and FIG. 10B, type 1 (Type1) is selected.

### [Lay-Out Position of Line Segment That Closes Open Path]

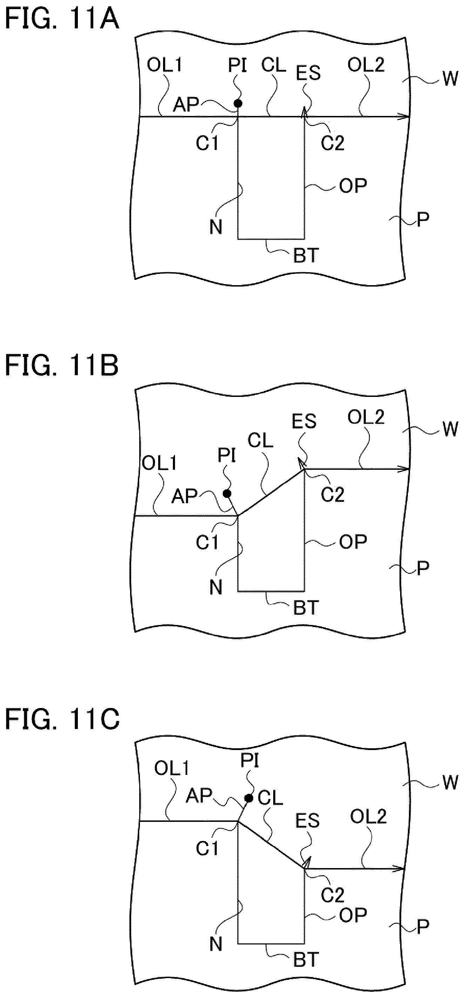

The computing device 10 determines the position of the line segment CL for which the first outer peripheral processing path is laid out, depending on the shape of the notch N to which the open path OP is laid out. FIG. 11A to FIG. 11C illustrate the position of the line segment CL when the corner portions C1 and C2 of the notch N to which the open path OP is laid out have a non-chamfered edge shape. The notch N illustrated in FIG. 11A to FIG. 11C may be any of the notches N11 to N13 illustrated in FIG. 3. The corner portions C1 and C2 correspond to any one of the corner portions C111 and C112, the corner portions C121 and C122, and the corner portions C131 and C132.

FIG. 11A illustrates a case in which, in the outer peripheral end portion of the product P, the line segment OL1 (first line segment) coupled to the corner portion C1 and the line segment OL2 (second line segment) coupled to the corner portion C2 are present on one straight line. FIG. 11B illustrates a case in which the line segment OL1 and the line segment OL2 are absent on one straight line, and the line segment OL2 is farther from a bottom portion BT of the notch N than the line segment OL1. FIG. 11C illustrates a case in which the line segment OL1 and the line segment OL2 are absent on one straight line, and the line segment OL1 is farther from the bottom portion BT than the line segment OL2. In those cases, the notch N has a rectangular shape, and hence the bottom portion BT is a bottom side of the notch N.

As illustrated in FIG. 11A, the computing device 10 lays out the first outer peripheral processing path to the line segment CL connecting between the corner portion C1 that is the start point of the open path OP and the corner portion C2 that is the end point of the open path OP. As illustrated in FIG. 11B and FIG. 11C, even when the line segment OL1 and the line segment OL2 are absent on one straight line, the computing device 10 basically lays out the first outer peripheral processing path to the line segment CL connecting between the corner portion C1 and the corner portion C2. However, when the shape of the notch N satisfies conditions described later, it is preferred that the computing device 10 do not lay out the first outer peripheral processing path to the line segment CL connecting between the corner portion C1 and the corner portion C2, but lay out the first outer peripheral processing path to a line segment CL whose position has been changed.

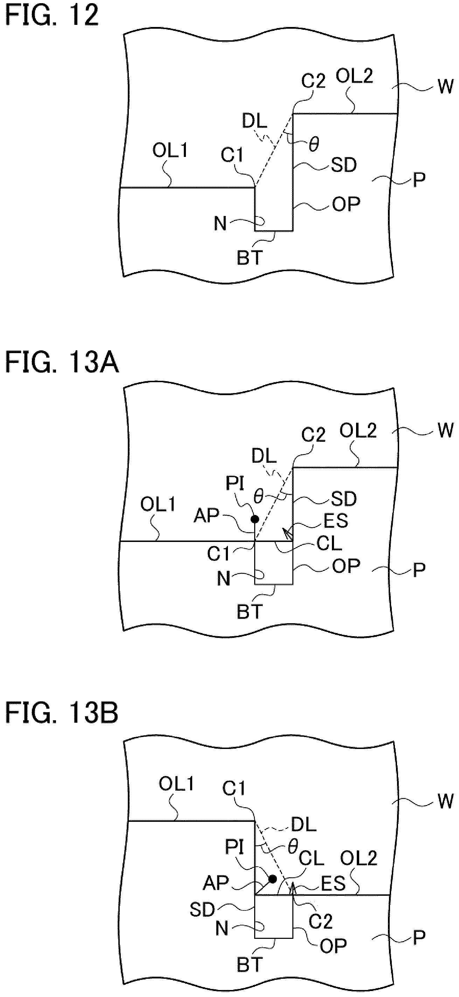

With reference to FIG. 12, a description is given of a condition in which the position of the line segment CL is preferred to be changed when the corner portions C1 and C2 of the notch N have a non-chamfered edge shape. One of the corner portion C1 and the portion corner C2 closer to the bottom portion BT of the notch N is referred to as a first corner portion, and the other thereof farther from the bottom portion BT is referred to as a second corner portion. In FIG. 12, the corner portion C1 is the first corner portion, and the corner portion C2 is the second corner portion that is farther from the bottom portion BT than the corner portion C1. An angle on the product P side, which is formed between a tentative line segment DL (third line segment) that couples the first corner portion and the second corner portion and a lateral side SD extending from the second corner portion toward the bottom portion BT, is represented by an angle θ.

When the angle θ is equal to or larger than a predetermined angle, the computing device 10 directly uses the tentative line segment DL as the line segment CL as illustrated in FIG. 11B to lay out the first outer peripheral processing path to the line segment CL. The predetermined angle is 45 degrees, for example.

FIG. 13A illustrates a state in which the position of the line segment CL has been changed when the corner portion C1 is the first corner portion, the corner portion C2 is the second corner portion farther from the bottom portion BT than the corner portion C1, and the angle θ formed between the tentative line segment DL and the lateral side SD extending from the second corner portion toward the bottom portion BT is smaller than the predetermined angle. As illustrated in FIG. 13A, when the angle θ is smaller than the predetermined angle, the computing device 10 uses a line segment (fourth line segment) extending from the first corner portion to the lateral side SD, which is obtained by extending the line segment OL1 coupled to the first corner portion from the first corner portion to the lateral side SD, as a new line segment CL to lay out the first outer peripheral processing path to the line segment CL.

FIG. 13B illustrates a state in which the position of the line segment CL has been changed when the corner portion C2 is the first corner portion, the corner portion C2 is the second corner portion farther from the bottom portion BT than the corner portion C1, and the angle θ formed between the tentative line segment DL and the lateral side SD extending from the second corner portion toward the bottom portion BT is smaller than the predetermined angle. As illustrated in FIG. 13B, when the angle θ is smaller than the predetermined angle, similarly to FIG. 13A, the computing device 10 uses a line segment (fourth line segment) extending from the first corner portion to the lateral side SD, which is obtained by extending the line segment OL2 coupled to the first corner portion from the first corner portion to the lateral side SD, as a new line segment CL to lay out the first outer peripheral processing path to the line segment CL.

In a case in which the angle θ is smaller than 45 degrees for example,, when the first outer peripheral processing path is laid out to the line segment CL connecting between the corner portion C1 and the corner portion C2 and the part of the notch N is cut off, a processing failure may occur in the corner portion C1 or C2. When the position of the line segment CL is changed as illustrated in FIG. 13A or FIG. 13B, it is possible to suppress the occurrence of the processing failure.

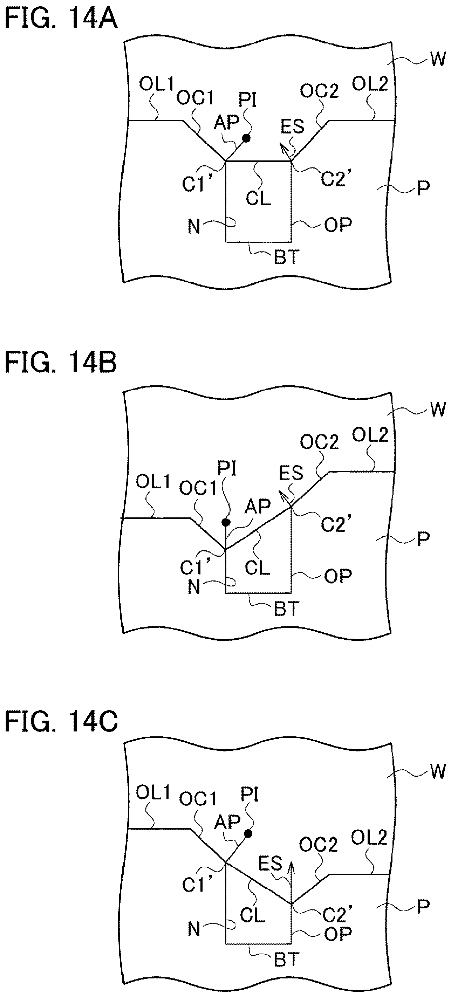

FIG. 14A to FIG. 14C illustrate the position of the line segment CL in a case in which the corner portions C1 and C2 of the notch N to which the open path OP is laid out are C-chamfered. FIG. 14A to FIG. 14C each illustrate a case in which the corner portion C1 and the corner portion C2 are C-chamfered, and line segments OC1 and OC2 are laid out between the open path OP and the line segments OL1 and OL2. The start point of the open path OP is a corner portion C1' that is coupled to the line segment OC1 in place of the corner portion C1, and the end point of the open path OP is a corner portion C2' coupled to the line segment OC2 in place of the corner portion C2.

As illustrated in FIG. 14A, the computing device 10 lays out the first outer peripheral processing path to the line segment CL connecting between the corner portion C1' that is the start point of the open path OP and the corner portion C2' that is the end point of the open path OP. As illustrated in FIG. 14B and FIG. 14C, even when the line segment OL1 and the line segment OL2 are absent on one straight line, the computing device 10 basically lays out the first outer peripheral processing path to the line segment CL connecting between the corner portion C1' and the corner portion C2'. However, when the shape of the notch N satisfies a condition described below, it is preferred that the computing device 10 do not lay out the first outer peripheral processing path to the line segment CL connecting between the corner portion C1' and the corner portion C2', but lay out the first outer peripheral processing path to the line segment CL whose position has been changed.

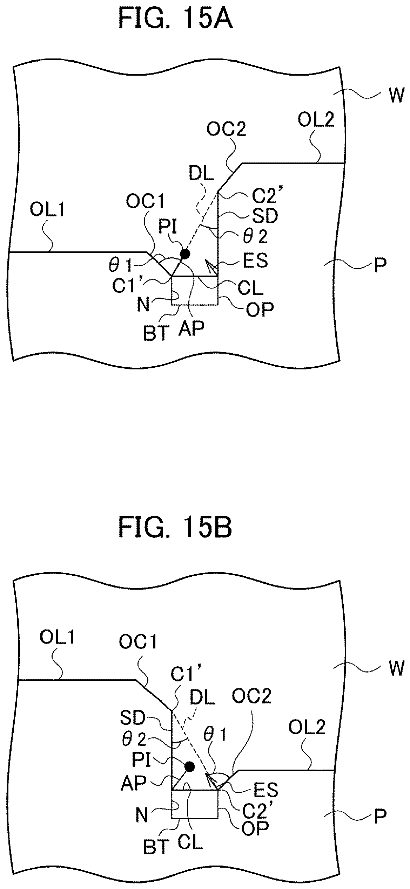

In FIG. 15A and FIG. 15B, one of the corner portion C1' and the corner portion C2' closer to the bottom portion BT of the notch N is referred to as a first corner portion, and the other thereof farther from the bottom portion BT is referred to as a second corner portion. In FIG. 15A, the corner portion C1' is the first corner portion, and the corner portion C2' is the second corner portion. An angle on the outer side of the product P, which is formed between the line segment OC1 and a tentative line segment DL (third line segment) that couples the first corner portion and the second corner portion, is represented by an angle θ1, and an angle on the product P side, which is formed between the tentative line segment DL and the lateral side SD extending from the second corner portion toward the bottom portion BT, is represented by an angle θ2. In FIG. 15B, the corner portion C2' is the first corner portion, and the corner portion C1' is the second corner portion. An angle on the outer side of the product P, which is formed between the line segment OC2 and the tentative line segment DL, is represented by an angle θ1, and an angle on the product P side, which is formed between the tentative line segment DL and the lateral side SD, is represented by an angle θ2.

When the angle θ1 or θ2 is equal to or larger than a predetermined angle, the computing device 10 directly uses the tentative line segment DL as the line segment CL as illustrated in FIG. 14B and FIG. 14C to lay out the first outer peripheral processing path to the line segment CL. The predetermined angle is 45 degrees, for example. As illustrated in FIG. 15A and FIG. 15B, when the angle θ1 or θ2 is smaller than the predetermined angle, the computing device 10 uses a line segment (fourth line segment) extending from the first corner portion to the lateral side SD as a new line segment CL to lay out the first outer peripheral processing path to the line segment CL. The fourth line segment is parallel to the line segment OL1 or the line segment OL2, and is orthogonal to the lateral side SD.

In a case in which the angle θ1 or the angle θ2 is smaller than 45 degrees, for example, when the first outer peripheral processing path is laid out to the line segment CL connecting between the corner portion C1' and the corner portion C2' and the part of the notch N is cut off, a processing failure may occur in the corner portion C1' or C2'. When the position of the line segment CL is changed as illustrated in FIG. 15A or FIG. 15B, it is possible to suppress the occurrence of the processing failure.

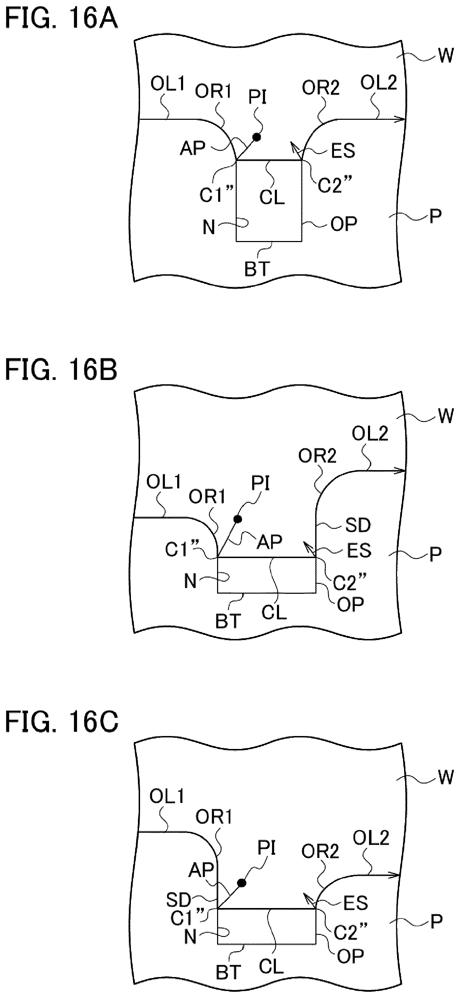

FIG. 16A to FIG. 16C illustrate the position of the line segment CL in a case in which the corner portions C1 and C2 of the notch N to which the open path OP is laid out are rounded. FIG. 16A to FIG. 16C each illustrate a case in which the corner portion C1 and the corner portion C2 in FIG. 11A to FIG. 11C are rounded, and line segments OR1 and OR2 are laid out between the open path OP and the line segments OL1 and OL2.

In FIG. 16A, the start point of the open path OP is a corner portion C1" coupled to the line segment OR1 in place of the corner portion C1, and the end point of the open path OP is a corner portion C2" coupled to the line segment OC2 in place of the corner portion C2. The computing device 10 lays out the first outer peripheral processing path to the line segment CL connecting between the corner portion C1" that is the start point of the open path OP and the corner portion C2" that is the end point of the open path OP. In FIG. 16B, an end portion of the line segment OR1 coupled to the line segment OL1 that is closer to the bottom portion BT is regarded as the corner portion C1" that is the start point of the open path OP. A position at which the line segment CL extending from the corner portion C1" in parallel to the line segments OL1 and OL2 is coupled to the lateral side SD connected to the line segment OR2 coupled to the line segment OL2 that is farther from the bottom portion BT is regarded as the corner portion C2" that is the end point of the open path OP. The computing device 10 lays out the first outer peripheral processing path to the line segment CL.

In FIG. 16C, an end portion of the line segment OR2 coupled to the line segment OL2 that is closer to the bottom portion BT is regarded as the corner portion C2" that is the end point of the open path OP. A position at which the line segment CL extending from the corner portion C2" in parallel to the line segments OL1 and OL2 is coupled to the lateral side SD connected to the line segment OR1 coupled to the line segment OL1 that is farther from the bottom portion BT is regarded as the corner portion C1" that is the start point of the open path OP. The computing device 10 lays out the first outer peripheral processing path to the line segment CL.

When the corner portions C1 and C2 of the notch N illustrated in FIG. 16A to FIG. 16C are rounded, the position of the line segment CL does not need to be changed when some kind of condition is satisfied.

The line segments OC1 and OC2 of FIG. 14A or the line segments OR1 and OR2 of FIG. 16A may be coupled to the respective line segments OL1 and OL2 of the outer peripheral end portion of the product P to become parts of the outer peripheral path OU of FIG. 4B or parts of the outer peripheral path OU2 of FIG. 6B. In this case, the start point and the end point of the open path OP to which the approach AP and the lead-out ES are respectively connected are end portions of the line segments OC1 and OC2 or the line segments OR1 and OR2 on the open path OP side.

The line segments OC1 and OC2 of FIG. 14A or the line segments OR1 and OR2 of FIG. 16A may be coupled to the open path OP to become parts of the open path OP. In this case, the start point and the end point of the open path OP to which the approach AP and the lead-out ES are respectively connected are end portions of the line segments OC1 and OC2 or the line segments OR1 and OR2 on the side of the line segments OL1 and OL2 of the outer peripheral end portion of the product P.

### [Directions of Approach and Lead-out]

The computing device 10 lays out, to a part of each notch N, the approach AP to connect the approach AP to the start point of the open path OP, and lays out the lead-out ES connected to the end point of the open path OP. The direction of the approach AP as viewed from the start point of the open path OP and the direction of the lead-out ES as viewed from the end point of the open path OP can be determined based on the shape of the angle of the notch N to which the open path OP is laid out.

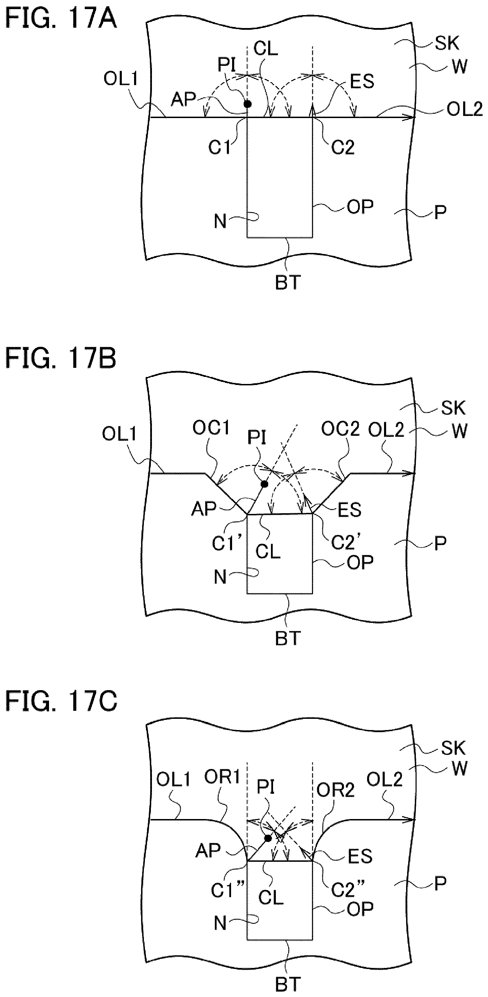

FIG. 17A to FIG. 17C respectively illustrate the approach AP and lead-out ES to be laid out to the notches N whose corner portions have the edge shape, the C-chamfered shape, and the rounded shape. FIG. 17A to FIG. 17C illustrate preferred directions of the approach AP and the lead-out ES in the cases of FIG. 11A, FIG. 14A, and FIG. 16A, respectively.

In FIG. 17A, an opening angle between the line segment OL1 and the line segment CL that closes the open path OP is 180°, and an opening angle between the line segment OL2 and the line segment CL is 180°. The direction of the approach AP is preferred to be a direction of 90°, which is an angle that bisects the opening angle of 180° to the skeleton SK side. The direction of the lead-out ES is preferred to be a direction of 90°, which is an angle that bisects the opening angle of 180° to the skeleton SK side.

In FIG. 17B, an opening angle between the line segment OC1 and the line segment CL is smaller than 180°, and an opening angle between the line segment OC2 and the line segment CL is smaller than 180°. The direction of the approach AP is preferred to be a direction of an angle that bisects the opening angle of smaller than 180° to the skeleton SK side. The direction of the lead-out ES is preferred to be a direction of an angle that bisects the opening angle of smaller than 180° to the skeleton SK side.

In FIG. 17C, an opening angle between a tangent line at the corner portion C1" of the line segment OR1 and the line segment CL is smaller than 180°, and an opening angle between a tangent line at the corner portion C2" of the line segment OR2 and the line segment CL is smaller than 180°. The direction of the approach AP is preferred to be a direction of an angle that bisects the opening angle of smaller than 180° to the skeleton SK side. The direction of the lead-out ES is preferred to be a direction of an angle that bisects the opening angle of smaller than 180° to the skeleton SK side.

With the directions of the approach AP and the lead-out ES being set as illustrated in FIG. 17A to FIG. 17C, it is possible to suppress adhesion to the product P of a molten metal of the workpiece W that is scattered as spatters at the time of performing laser processing of the approach AP and the lead-out ES.

In FIG. 17A, the pierced hole PI may be located away from the product P to lengthen the approach AP and the lead-out ES. In FIG. 17B and FIG. 17C, the approach AP and the lead-out ES may be lengthened within a range in which the approach AP and the lead-out ES do not intersect with each other. The lengths of the approach AP and the lead-out ES may be, at the longest, a half of a distance from the corner portion C1' or C1" to the intersection therebetween and a half of a distance from the corner portion C2' or C2" to the intersection therebetween, respectively.

Before the length of the approach AP is confirmed, when the pierced hole PI is close to the product P and there is a risk in that the molten metal of the workpiece W scattered at the time of piercing may become spatters to adhere to the product P, a warning message may be displayed on the display 80 (touch panel 325). When the computing device 10 determines that there is a risk in that the spatters may adhere to the product P, the NC device 50 displays a warning message on the display 80.

The length of the approach AP illustrated in FIG. 17A to FIG. 17C may be the same length as the approach AP14 for the outer peripheral path OU. In this case, the length of the approach AP set at the time of performing laser processing of the notch N can be used as the length of the approach AP14 at the time of performing laser processing of the outer peripheral path OU.

### [Manual Lay-Out]

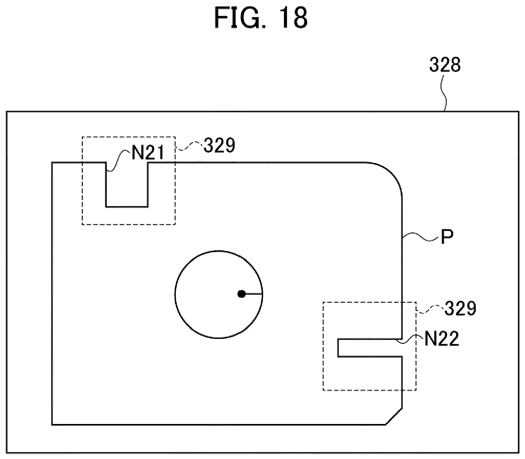

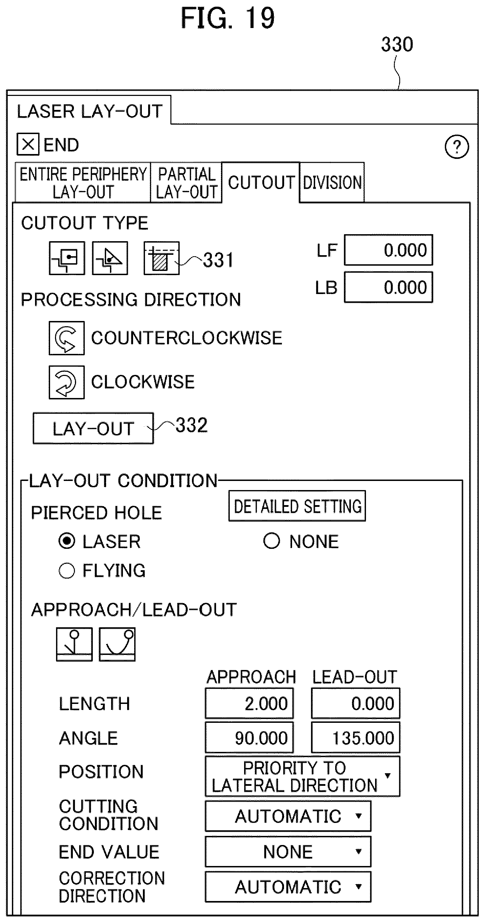

The computing device 10 can also lay out the laser processing path to the nesting data through manual lay-out. The NC device 50 displays a part image and a part editing image generated by the computing device 10 on the touch panel 325 of the operation pendant 324 so that the user can manually lay out the laser processing path to the product P. FIG. 18 illustrates an example of a part image 328 displayed on the touch panel 325, and FIG. 19 illustrates an example of a part editing image 330 displayed on the touch panel 325.

In FIG. 18, the part image 328 displays a diagram of the product P to which the laser processing path is laid out through manual lay-out. The product P illustrated in FIG. 18 includes notches N21 and N22 at its outer peripheral end portion. When the user touches parts of the notches N21 and N22 on the part image 328, ranges including the notches N21 and N22 are selected, as being surrounded by dashed-line frames 329.

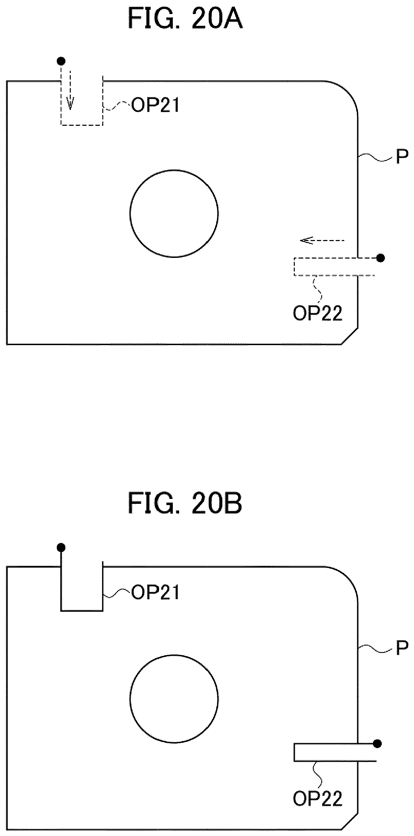

In the part editing image 330 illustrated in FIG. 19, the laser processing path can be laid out through manual lay-out to the notches N21 and N22 selected as illustrated in FIG. 18. Specifically, the user touches a button 331 indicating type 1 displayed as a cutout type in a cutout tab, and thus the user can designate type 1 as the pattern of the laser processing path to be laid out. When the user touches the button 331, as illustrated in FIG. 20A, the notches N21 and N22 surrounded by the dashed-line frames 329 of the part image 328 are switched to open paths OP21 and OP22 indicated by the dashed lines.

After that, when the user touches a lay-out button 332 in the cutout tab, the laser processing path can be confirmed to type 1. As illustrated in FIG. 20B, when the user touches the lay-out button 332, the open paths OP21 and OP22 indicated by the dashed lines are switched to the open paths OP21 and OP22 in the confirmed state, which are indicated by the solid lines. The computing device 10 may request the user to input necessary processing conditions when the open paths OP21 and OP22 are laid out to the notches N21 and N22 through manual lay-out.

In the part editing image 330 illustrated in FIG. 19, as the cutout type, a button for designating type 2 as the laser processing path to be laid out may be added, or a button for designating type 3 as the laser processing path to be laid out may be added.

After the pattern of the laser processing path is confirmed to type 1, the computing device 10 lays out the laser processing path to the nesting data similarly to the automatic lay-out.

The open paths OP21 and OP22 laid out by the user to the parts of the notches N21 and N22 in manual lay-out may be processing paths including the pierced hole PI, the approach AP, and the lead-out ES. The directions and the lengths of the approach AP and the lead-out ES may be similar to those in the automatic lay-out. Even in the manual lay-out, a warning message may be displayed on the touch panel 325 as required.

### [Processing Performed by Automatic Lay-Out]

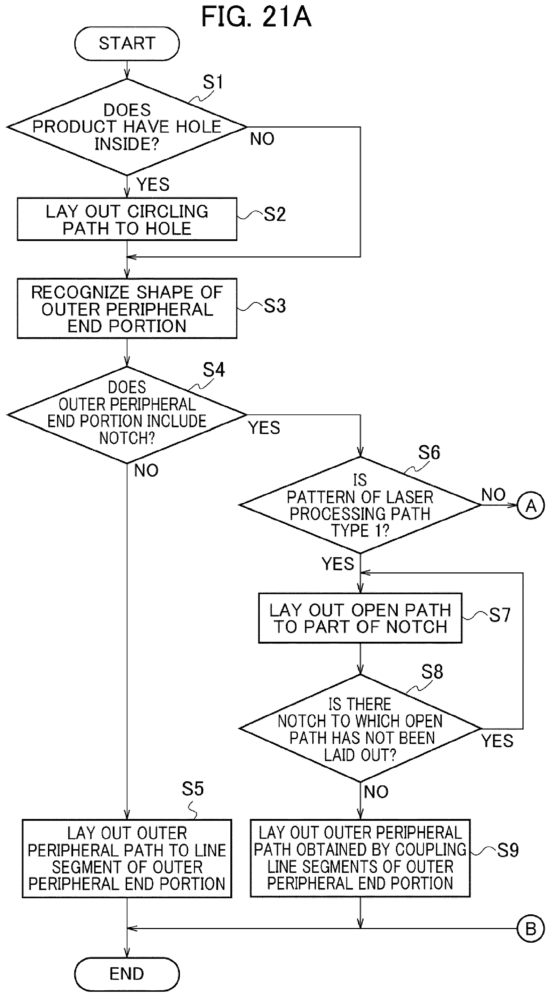

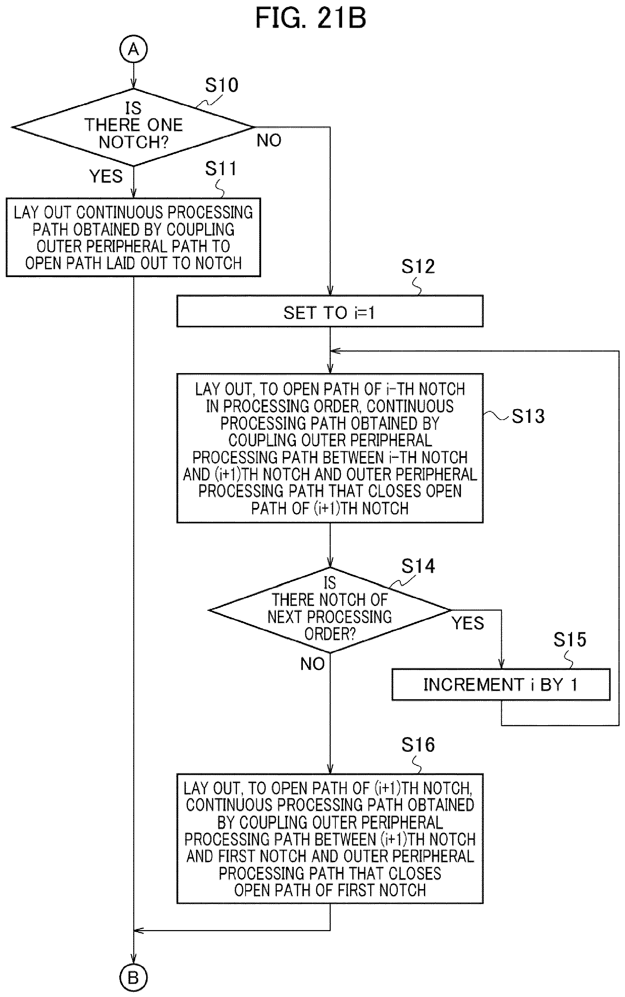

With reference to the flow charts illustrated in FIG. 21A and FIG. 21B, a description is given of an example of processing of laying out a laser processing path to nesting data by the computing device 10 through automatic lay-out. In this case, it is assumed that the selectable pattern of the laser processing path is type 1 or type 2.

In FIG. 21A, in step S1, the computing device 10 determines whether or not there is a hole inside the product P based on shape data indicating the shape of the product P in the nesting data. When there is a hole inside the product P (YES), in step S2, the computing device 10 lays out a circling path to the hole, and causes the processing to proceed to step S3. When there is no hole inside the product P (NO), the computing device 10 causes the processing to proceed to step S3.

In step S3, the computing device 10 recognizes the shape of the outer peripheral end portion of the product P based on the shape data of the product P. In step S4, the computing device 10 determines whether or not there is a notch at the outer peripheral end portion. When there is no notch (NO), in step S5, the computing device 10 lays out an outer peripheral path for cutting the outer peripheral end portion to a line segment of the outer peripheral end portion of the product P, and ends the processing.

When there is a notch at the outer peripheral end portion in step S4 (YES), in step 6, the computing device 10 determines whether or not the selected pattern of the laser processing path is type 1. When the pattern of the laser processing path is type 1 (YES), in step S7, the computing device 10 lays out an open path to the part of the notch, and causes the processing to proceed to step S8. In step S8, the computing device 10 determines whether or not there is a notch to which an open path has not been laid out. When there is a notch to which an open path has not been laid out (YES), the computing device 10 repeats the processing of steps S7 and S8.

When there is no notch to which an open path has not been laid out in step S8 (NO), in step S9, the computing device 10 lays out an outer peripheral path obtained by coupling the line segments of the outer peripheral end portion, and ends the processing. The outer peripheral path in step S9 is a continuous processing path that makes a round along the outer peripheral end portion of the product P, and includes a first outer peripheral processing path and a second outer peripheral processing path. The first outer peripheral processing path is an outer peripheral processing path in a part of each notch, and the second outer peripheral processing path is the entire outer peripheral processing path in a part other than the notch.

When the pattern of the laser processing path selected in step S6 is not type 1 (NO) (that is, when the selected pattern of the laser processing path is type 2), in step S10 of FIG. 21B, the computing device 10 determines whether or not the number of notches formed at the outer peripheral end portion is one. When the number of notches is one (YES), in step S11, the computing device 10 lays out a continuous processing path obtained by coupling the outer peripheral path to the open path laid out to the notch, and ends the processing. The outer peripheral path in step S11 is a continuous processing path obtained by coupling the second outer peripheral processing path, which is the entire outer peripheral processing path in the part other than the notch, and the first outer peripheral processing path, which is the outer peripheral processing path in the part of the notch, in this order.

When the number of notches is not one in step S10 (NO), in step S12, the computing device 10 sets a variable i to 1. Subsequently, in step S13, the computing device 10 lays out, to the open path of an i-th notch in the processing order, a continuous processing path obtained by coupling an outer peripheral processing path (second outer peripheral processing path) between the i-th notch and an (i+1)th notch and an outer peripheral processing path (first outer peripheral processing path) that closes the open path of the (i+1)th notch. In step S14, the computing device 10 determines whether or not there is a notch of the next processing order. When there is a notch of the next processing order (YES), in step S15, the computing device 10 increments the variable i by 1, and returns the processing to step S13. The computing device 10 repeats the processing of steps S13 to S15 until it is determined in step S14 that there is no notch of the next processing order.

When there is no notch of the next processing order in step S14 (NO), in step S16, the computing device 10 lays out, to the open path of the (i+1)th notch, a continuous processing path obtained by coupling an outer peripheral processing path (second outer peripheral processing path) between the (i+1)th notch and the first notch and an outer peripheral processing path (first outer peripheral processing path) that closes the open path of the first notch, and ends the processing.

### [Processing Performed by Manual Lay-Out]

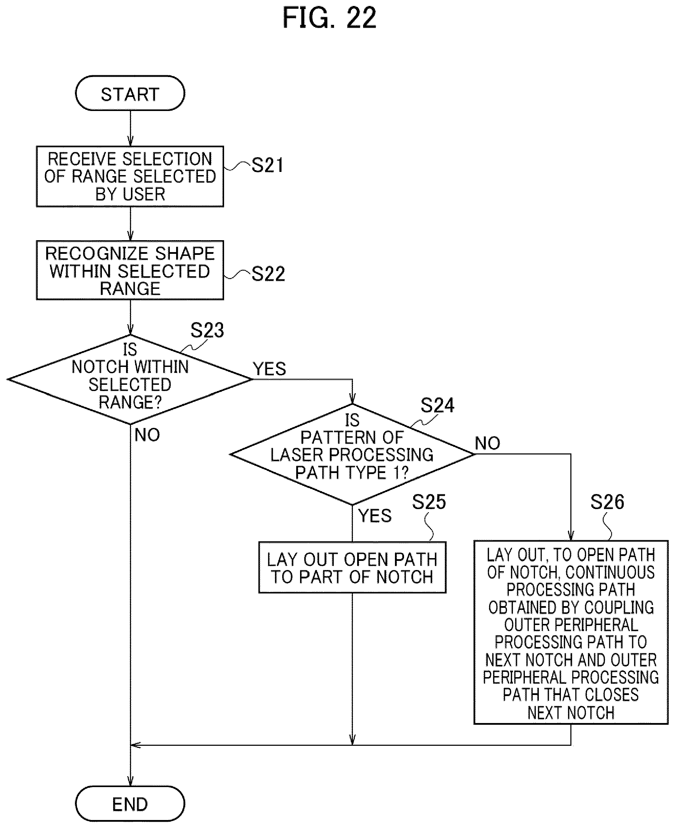

With reference to the flow chart illustrated in FIG. 22, a description is given of an example of processing of laying out a laser processing path to nesting data by the computing device 10 through manual lay-out. In this case, it is assumed that the selectable pattern of the laser processing path is type 1 or type 2. In this case, an example of a case in which the product P is the product P illustrated in FIG. 18 is described.

In FIG. 22, in step S21, the computing device 10 receives selection of a range of the part image 328 of FIG. 18 selected by the user operating the touch panel 325. In step S22, the computing device 10 recognizes the shape within the selected range. In step S23, the computing device 10 determines whether or not there is a notch within the selected range. When there is no notch within the selected range (NO), the computing device 10 ends the processing. In this case, the computing device 10 is only required to lay out the outer peripheral path for cutting the outer peripheral end portion to the line segment of the outer peripheral end portion of the product P through another manual lay-out performed by the user.

When there is a notch within the selected range in step S23 (YES), in step S24, the computing device 10 determines whether or not the selected pattern of the laser processing path is type 1. When the pattern of the laser processing path is type 1 (YES), in step S25, the computing device 10 lays out an open path to the part of the notch, and ends the processing. In this case as well, the computing device 10 is only required to lay out the outer peripheral path for cutting the outer peripheral end portion to the line segment of the outer peripheral end portion of the product P through another manual lay-out performed by the user.

When the pattern of the laser processing path is not type 1 in step S24 (NO), in step S26, the computing device 10 lays out, to the open path of the notch, a continuous processing path obtained by coupling an outer peripheral processing path to the next notch and an outer peripheral processing path that closes the next notch, and ends the processing.

### [Laser Processing Process]

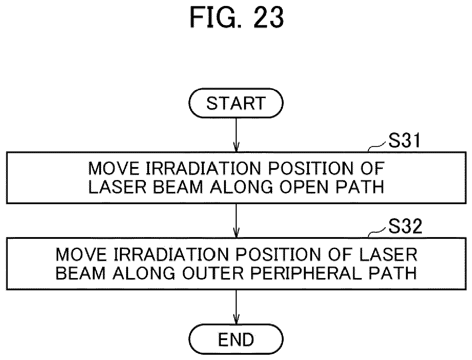

With reference to the flow chart of FIG. 23, a description is given of an example of a laser processing process performed by the NC device 50 controlling the laser processing machine 20 to cut out the product P from the workpiece W. In this case, it is assumed that the computing device 10 lays out a laser processing path of type 1 to the workpiece W through automatic lay-out. In FIG. 23, in step S31, the NC device 50 moves an irradiation position of a laser beam on the workpiece W along the open path. In step S32, the NC device 50 moves the irradiation position of the laser beam on the workpiece W along the outer peripheral path, and ends the processing.

According to the laser processing method executed by the laser processing machine 20 through control of the laser processing machine 20 by the NC device 50 as illustrated in FIG. 23, when the processing head 34 moves above the workpiece W to cut the outer peripheral end portion of the product P, the notch N is not cut off from the workpiece W, and thus no scrap is formed in the part of the notch N. Thus, a scrap produced by cutting off the notch N is not caught between the skids 312 to rise higher than the workpiece W. Accordingly, the processing head 34 does not interfere with the scrap produced by cutting off the notch N.

When the laser processing path laying-out method using type 1 illustrated in FIG. 5, the laser processing path laying-out method using type 2 illustrated in FIG. 7 or FIG. 8, and the laser processing path laying-out method using type 3 illustrated in FIG. 9 described above are summarized, the laser processing path laying-out method according to one or more embodiments discloses the following laser processing path laying-out method.

The laser processing path laying-out method according to one or more embodiments includes laying out, within a laser processing path for cutting out a product P including a notch N at an outer peripheral end portion thereof from a workpiece W by laser processing, to a part of the notch N of nesting data, an open path OP for cutting to an inner side of the product P, the open path OP opening toward the outer side of the product P. The open path OP is a partial processing path in a notch formation processing path for forming the notch N, and is a processing path excluding a line segment CL of the part of the notch N in the outer peripheral end portion of the product P.

The laser processing path laying-out method according to one or more embodiments includes laying out, to the nesting data, an outer peripheral path in the laser processing path. The outer peripheral path is a processing path obtained by coupling a first outer peripheral processing path for cutting the line segment of the part of the notch N in the outer peripheral end portion, which is a remaining partial processing path in the notch formation processing path, and a second outer peripheral processing path for cutting at least a part of a line segment other than the part of the notch N in the outer peripheral end portion.

When the laser processing path is laid out to the nesting data by the laser processing path laying-out method according to the one or more embodiments, interference between the processing head 34 and the scrap of the workpiece W (scrap produced by cutting off the part of the notch N) can be suppressed during laser processing of the product P including the notch N.

The product P illustrated in FIG. 3 includes one or more notches N (N11 to N13) at the outer peripheral end portion thereof. The laser processing path laying-out method using type 1 illustrated in FIG. 5 includes laying out, to the part of the notch N of the nesting data, as the open path OP, a single open path OP that is not coupled to an outer peripheral processing path for cutting at least a part of a line segment other than the part of the notch N in the outer peripheral end portion. The laser processing path laying-out method using type 1 further includes laying out, to the nesting data, as the second outer peripheral processing path, an outer peripheral processing path for cutting an entire line segment other than the part of the notch N in the outer peripheral end portion. The laser processing path laying-out method using type 1 further includes laying out a continuous outer peripheral path obtained by coupling the first outer peripheral processing path of each notch and the second outer peripheral processing path.

According to the laser processing path laying-out method using type 1, the outer peripheral end portion of the product P can be cut by one laser processing passing through the continuous outer peripheral path.

The product P illustrated in FIG. 8 includes one notch N (N11) at the outer peripheral end portion thereof. The laser processing path laying-out method using type 2 includes laying out, to the nesting data, as the second outer peripheral processing path, an outer peripheral processing path for cutting an entire line segment (line segment OL11) other than the part of the notch N in the outer peripheral end portion. The laser processing path laying-out method using type 2 further includes laying out, to the nesting data, a continuous outer peripheral path (processing path OU11) obtained by coupling the second outer peripheral processing path and the first outer peripheral processing path in this order. The laser processing path laying-out method using type 2 further includes laying out, to the nesting data, a continuous processing path obtained by coupling the open path OP (OP11) and the outer peripheral path in this order.

The product P illustrated in FIG. 3 includes first and second notches adjacent to each other at the outer peripheral end portion thereof. The notches N11 and N12, the notches N12 and N13, or the notches N13 and N11 correspond to the first and second notches. The laser processing path laying-out method using type 2 illustrated in FIG. 7 includes laying out, to the nesting data, as the second outer peripheral processing path, an outer peripheral processing path for cutting a line segment (line segment OL11, OL12, or OL13) between the first notch and the second notch, which is a part of the outer peripheral end portion.

The laser processing path laying-out method using type 2 illustrated in FIG. 7 further includes laying out, to the nesting data, a continuous outer peripheral path obtained by coupling the second outer peripheral processing path and the first outer peripheral processing path in the notch formation processing path of the second notch in this order. The processing path for cutting the line segment CL12, CL13, or CL11 corresponds to the first outer peripheral processing path here. The laser processing path laying-out method using type 2 illustrated in FIG. 7 further includes laying out, to the nesting data, a continuous processing path obtained by coupling the open path (open path OP12, OP13, or OP11) of the first notch and the outer peripheral path in this order.

According to the laser processing path laying-out method using type 2, the number of pierced holes and approaches formed in the workpiece W can be reduced as compared to the laser processing path laying-out method using type 1.

The laser processing method according to one or more embodiments discloses the following laser processing method to be executed by the laser processing machine 20. The laser processing machine 20 cuts out a product P including a notch N at an outer peripheral end portion thereof by laser processing from a workpiece W supported by a skid 312. At this time, the laser processing machine 20 irradiates the workpiece W with a laser beam along an open path OP as a partial processing path in a notch formation processing path for forming the notch N, thereby cutting the open path OP in the workpiece W. The open path OP is a processing path for cutting to an inner side of the product P, excluding a line segment of a part of the notch N in the outer peripheral end portion, and opens toward an outer side of the product P.

The laser processing machine 20 irradiates, before or after cutting the open path in the workpiece W, the workpiece W with a laser beam along an outer peripheral path obtained by coupling a first outer peripheral processing path and a second outer peripheral processing path, thereby cutting the outer peripheral path in the workpiece W. The first outer peripheral processing path is a processing path for cutting the line segment CL of the part of the notch in the outer peripheral end portion, which is a remaining partial processing path in the notch formation processing path. The second outer peripheral processing path is a processing path for cutting at least a part of a line segment other than the part of the notch N in the outer peripheral end portion.

According to the laser processing method of the one or more embodiments, interference between the processing head 34 and the scrap produced by cutting off the part of the notch N is suppressed, and hence it is possible to suppress abnormal stop of the laser processing or occurrence of a processing failure.

When the laser processing path obtained by the laser processing path laying-out method using type 1 illustrated in FIG. 5 is laid out to the nesting data, the laser processing machine 20 processes the workpiece W as follows. The laser processing machine 20 irradiates the workpiece W with a laser beam along the open path OP laid out to correspond to each notch N, thereby cutting only the open path in the workpiece W alone. After the laser processing machine 20 cuts the open path OP in the workpiece W, the laser processing machine 20 irradiates the workpiece W with a laser beam along an outer peripheral path obtained by coupling the first outer peripheral processing path and the second outer peripheral processing path, thereby cutting out the product P from the workpiece W. The second outer peripheral processing path is a processing path for cutting an entire line segment other than the part of the notch N in the outer peripheral end portion.

When the laser processing path obtained by the laser processing path laying-out method using type 2 illustrated in FIG. 8 is laid out to the nesting data, the laser processing machine 20 processes the workpiece W as follows. The laser processing machine 20 irradiates the workpiece W with a laser beam along the open path OP, thereby cutting the open path OP in the workpiece W. The laser processing machine 20 irradiates, continuously with the cutting of the open path OP, the workpiece W with a laser beam along an outer peripheral path obtained by coupling, as the second outer peripheral processing path, an entire line segment other than the part of the notch N in the outer peripheral end portion and the first outer peripheral processing path in this order, thereby cutting out the product from the workpiece W.

When the laser processing path obtained by the laser processing path laying-out method using type 2 illustrated in FIG. 7 is laid out to the nesting data, the laser processing machine 20 processes the workpiece W as follows. Two notches N adjacent to each other in the at least two notches N are represented by first and second notches.

The laser processing machine 20 irradiates the workpiece W with a laser beam along a first open path as the open path OP laid out to correspond to the first notch, thereby cutting the first open path in the workpiece W. The laser processing machine 20 irradiates, continuously with the cutting of the first open path, the workpiece W with a laser beam along, as the second outer peripheral processing path, an outer peripheral processing path for cutting a line segment between the first notch and the second notch, which is a part of the outer peripheral end portion, thereby cutting the second outer peripheral processing path in the workpiece W. The laser processing machine 20 irradiates, continuously with the cutting of the second outer peripheral processing path, the workpiece W with a laser beam along the first outer peripheral processing path in the notch formation processing path of the second notch, thereby cutting the first outer peripheral processing path of the second notch in the workpiece W.

The laser processing path laying-out device according to one or more embodiments can be configured with the computing device 10. The computing device 10 includes a CPU 11 and a storage unit 12. The storage unit 12 has stored therein a laser processing path laying-out program for laying out, to nesting data in which a shape of a product P including a notch N at an outer peripheral end portion thereof is disposed in a shape indicating a workpiece W, a laser processing path for cutting out the product P from the workpiece W by laser processing.

The CPU 11 executes the laser processing path laying-out program to lay out, to a part of the notch N of the nesting data, an open path OP for cutting to an inner side of the product P, excluding a line segment of the part of the notch N in the outer peripheral end portion, the open path OP opening toward an outer side of the product P. The open path OP is, within the laser processing path, a partial processing path in a notch formation processing path for forming the notch N. Further, the CPU 11 executes the laser processing path laying-out program to lay out, to the nesting data, an outer peripheral path obtained by coupling a first outer peripheral processing path and a second outer peripheral processing path. The first outer peripheral processing path is, within the laser processing path, a processing path for cutting the line segment of the part of the notch N in the outer peripheral end portion, which is a remaining partial processing path in the notch formation processing path. The second outer peripheral processing path is, within the laser processing path, a processing path for cutting at least a part of a line segment other than the part of the notch N in the outer peripheral end portion.

According to the laser processing path laying-out device of the one or more embodiments, it is possible to lay out, to the nesting data, a laser processing path with which interference between the processing head 34 and the scrap of the workpiece W can be suppressed during laser processing of the product P including the notch N.

This application claims priority based on Japanese Patent Application No. 2022-050396 filed with the Japan Patent Office on March 25, 2022 and Japanese Patent Application No. 2023-043307 filed with the Japan Patent Office on March 17, 2023.

## Claims

1. A laser processing path laying-out method, **characterized by** comprising:
laying out, within a laser processing path for cutting out a product (P) including a notch (N, N11-N13, N21, N22) at an outer peripheral end portion thereof from a workpiece (W) by laser processing, to a part of the notch (N, N11-N13, N21, N22) of nesting data in which a shape of the product (P) is disposed in a shape indicating the workpiece (W), as a partial processing path in a notch formation processing path for forming the notch (N, N11-N13, N21, N22), an open path (OP) for cutting to an inner side of the product (P), excluding a line segment of the part of the notch (N, N11-N13, N21, N22) in the outer peripheral end portion, the open path (OP) opening toward an outer side of the product (P), a start point of the open path (OP) being an end point of an approach (AP) that starts at a position on the outer side of the product (P), a start point of the approach (AP) being connected to a pierced hole (PI) that is formed at a position on the outer side of the product (P), and a lead-out (ES) extending to the outer side of the product (P) being connected to an end point of the open path (OP); and
laying out, to the nesting data, within the laser processing path, an outer peripheral path (OU) obtained by coupling a first outer peripheral processing path for cutting the line segment of the part of the notch (N, N11-N13, N21, N22) in the outer peripheral end portion, which is a remaining partial processing path in the notch formation processing path, and a second outer peripheral processing path for cutting at least a part of a line segment other than the part of the notch (N, N11-N13, N21, N22) in the outer peripheral end portion.

2. The laser processing path laying-out method according to claim 1, wherein
the product (P) includes one or more notches (N, N11-N13, N21, N22) at the outer peripheral end portion thereof, and
the laser processing path laying-out method further comprises:
laying out, to the part of the notch (N, N11-N13, N21, N22) of the nesting data, as the open path (OP), a single open path (OP) that is not coupled to an outer peripheral processing path for cutting at least a part of a line segment other than the part of the notch (N, N11-N13, N21, N22) in the outer peripheral end portion;
laying out, to the nesting data, as the second outer peripheral processing path, an outer peripheral processing path for cutting an entire line segment other than the part of the notch (N, N11-N13, N21, N22) in the outer peripheral end portion; and
laying out, to the nesting data, a continuous outer peripheral path (OU) obtained by coupling the first outer peripheral processing path of each notch (N, N11-N13, N21, N22) and the second outer peripheral processing path.

3. The laser processing path laying-out method according to claim 1, wherein
the product (P) includes one notch (N11) at the outer peripheral end portion thereof,
the laser processing path laying-out method further comprises:
laying out, to the nesting data, as the second outer peripheral processing path, an outer peripheral processing path for cutting an entire line segment other than the part of the notch (N11) in the outer peripheral end portion;
laying out, to the nesting data, a continuous outer peripheral path (OU) obtained by coupling the second outer peripheral processing path and the first outer peripheral processing path in this order; and
laying out, to the nesting data, a continuous processing path obtained by coupling the open path (OP) and the outer peripheral path (OU) in this order.

4. The laser processing path laying-out method according to claim 1, wherein
the product (P) includes first and second notches (N, N11-N13, N21, N22) adjacent to each other at the outer peripheral end portion thereof, and
the laser processing path laying-out method further comprises:
laying out, to the nesting data, as the second outer peripheral processing path, an outer peripheral processing path for cutting a line segment between the first notch and the second notch (N, N11-N13, N21, N22), which is a part of the outer peripheral end portion;
laying out, to the nesting data, a continuous outer peripheral path (OU) obtained by coupling the second outer peripheral processing path and the first outer peripheral processing path in the notch formation processing path of the second notch (N, N11-N13, N21, N22) in this order; and
laying out, to the nesting data, a continuous processing path obtained by coupling the open path (OP) of the first notch (N, N11-N13, N21, N22) and the outer peripheral path (OU) in this order.

5. The laser processing path laying-out method according to any one of claims 1 to 4, further comprising, when a first corner portion and a second corner portion are opposed to each other on the outer peripheral end portion of the part of the notch (N, N11-N13, N21, N22), a first line segment of the outer peripheral end portion coupled to the first corner portion and a second line segment of the outer peripheral end portion coupled to the second corner portion are absent on one straight line, and the second corner portion is farther from a bottom portion of the notch (N, N11-N13, N21, N22) than the first corner portion:
laying out, when an angle formed between a third line segment that couples the first corner portion and the second corner portion and a lateral side directed from the second corner portion toward the bottom portion is equal to or larger than a predetermined angle, the first outer peripheral processing path to the third line segment; and
laying out, when the angle formed between the third line segment and the lateral side is smaller than the predetermined angle, the first outer peripheral processing path to a fourth line segment extending from the first corner portion to the lateral side, the fourth line segment being obtained by extending the first line segment from the first corner portion to the lateral side.

6. A laser processing method, comprising:
cutting out a product (P) including a notch (N, N11-N13, N21, N22) at an outer peripheral end portion thereof by laser processing from a workpiece (W) supported by a skid (312),
the method being **characterized in that** the cutting of the notch includes:
forming a pierced hole (PI) at a position on an outer side of the product (P) with a laser beam;
forming an approach (AP) connected to the pierced hole (PI) toward the outer peripheral end portion with a laser beam;
irradiating the workpiece (W) with a laser beam along an open path (OP) as a partial processing path in a notch formation processing path for forming the notch (N, N11-N13, N21, N22), a start point of the open path (OP) being an end point of the approach (AP), thereby cutting the open path (OP) in the workpiece (W), the open path (OP) being provided for cutting to an inner side of the product (P), excluding a line segment of a part of the notch (N, N11-N13, N21, N22) in the outer peripheral end portion, the open path (OP) opening toward an outer side of the product (P);
forming a lead-out (ES) connecting to an end point of the open path (OP) and extending to the outer side of the product (P) with a laser beam; and
irradiating, before or after cutting the open path (OP) in the workpiece (W), the workpiece (W) with a laser beam along an outer peripheral path (OU) obtained by coupling a first outer peripheral processing path and a second outer peripheral processing path, thereby cutting the outer peripheral path (OU) in the workpiece (W), the first outer peripheral processing path being provided for cutting the line segment of the part of the notch (N, N11-N13, N21, N22) in the outer peripheral end portion, which is a remaining partial processing path in the notch formation processing path, the second outer peripheral processing path being provided for cutting at least a part of a line segment other than the part of the notch (N, N11-N13, N21, N22) in the outer peripheral end portion.

7. The laser processing method according to claim 6, wherein
the product (P) includes one or more notches (N, N11-N13, N21, N22) at the outer peripheral end portion thereof, and
the laser processing method further comprises:
irradiating the workpiece (W) with a laser beam along the open path (OP) laid out to correspond to each notch (N, N11-N13, N21, N22), thereby cutting only the open path (OP) in the workpiece (W) alone; and
irradiating, after cutting the open path (OP) in the workpiece (W), the workpiece (W) with a laser beam along an outer peripheral path (OU) obtained by coupling the first outer peripheral processing path and, as the second outer peripheral processing path, a processing path for cutting an entire line segment other than the part of the notch (N, N11-N13, N21, N22) in the outer peripheral end portion, thereby cutting out the product (P) from the workpiece (W).

8. The laser processing method according to claim 6, wherein
the product (P) includes one notch (N11) at the outer peripheral end portion thereof, and
the laser processing method further comprises:
irradiating the workpiece (W) with a laser beam along the open path (OP), thereby cutting the open path (OP) in the workpiece (W); and
irradiating, continuously with the cutting of the open path (OP), the workpiece (W) with a laser beam along an outer peripheral path (OU) obtained by coupling, as the second outer peripheral processing path, an entire line segment other than the part of the notch (N11) in the outer peripheral end portion and the first outer peripheral processing path in this order, thereby cutting out the product (P) from the workpiece (W).

9. The laser processing method according to claim 6, wherein, when the product (P) includes at least two notches (N, N11-N13, N21, N22) at the outer peripheral end portion thereof, and two notches (N, N11-N13, N21, N22) adjacent to each other in the at least two notches (N, N11-N13, N21, N22) are represented by first and second notches (N, N11-N13, N21, N22), the laser processing method further comprises:
irradiating the workpiece (W) with a laser beam along a first open path (OP) as the open path (OP) laid out to correspond to the first notch (N, N11-N13, N21, N22), thereby cutting the first open path (OP) in the workpiece (W);
irradiating, continuously with the cutting of the first open path (OP), the workpiece (W) with a laser beam along, as the second outer peripheral processing path, an outer peripheral processing path for cutting a line segment between the first notch (N, N11-N13, N21, N22) and the second notch (N, N11-N13, N21, N22), which is a part of the outer peripheral end portion, thereby cutting the second outer peripheral processing path in the workpiece (W); and
irradiating, continuously with the cutting of the second outer peripheral processing path, the workpiece (W) with a laser beam along the first outer peripheral processing path in the notch formation processing path of the second notch (N, N11-N13, N21, N22), thereby cutting the first outer peripheral processing path of the second notch (N, N11-N13, N21, N22) in the workpiece (W).

10. The laser processing path laying-out device comprising:
a central processing unit (11); and
a storage unit (12) having stored therein a laser processing path laying-out program for laying out, to nesting data in which a shape of a product (P) including a notch (N, N11-N13, N21, N22) at an outer peripheral end portion thereof is disposed in a shape indicating a workpiece (W), a laser processing path for cutting out the product (P) from the workpiece (W) by laser processing,
**characterized in that**:
the central processing unit (11) is configured to execute the laser processing path laying-out program to:
lay out, within the laser processing path, to a part of the notch (N, N11-N13, N21, N22) of the nesting data, as a partial processing path in a notch formation processing path for forming the notch (N, N11-N13, N21, N22), an open path (OP) for cutting to an inner side of the product (P), excluding a line segment of the part of the notch (N, N11-N13, N21, N22) in the outer peripheral end portion, the open path (OP) opening toward an outer side of the product (P) , a start point of the open path (OP) being an end point of an approach (AP) that starts at a position on the outer side of the product (P), a start point of the approach (AP) being connected to a pierced hole (PI) that is formed at a position on the outer side of the product (P), and a lead-out (ES) extending to the outer side of the product (P) being connected to an end point of the open path (OP); and
lay out, to the nesting data, within the laser processing path, an outer peripheral path (OU) obtained by coupling a first outer peripheral processing path and a second outer peripheral processing path, the first outer peripheral processing path being provided for cutting the line segment of the part of the notch (N, N11-N13, N21, N22) in the outer peripheral end portion, which is a remaining partial processing path in the notch formation processing path, the second outer peripheral processing path being provided for cutting at least a part of a line segment other than the part of the notch (N, N11-N13, N21, N22) in the outer peripheral end portion.

## Patentansprüche

1. Verfahren zur Festlegung eines Laserbearbeitungspfads, **gekennzeichnet durch** die folgenden Schritte:
Festlegen, innerhalb eines Laserbearbeitungspfads zum Ausschneiden eines Produkts (P) , das eine Kerbe (N, N11-N13, N21, N22) an einem äußeren Umfangsendabschnitt aufweist, aus einem Werkstück (W) mittels Laserbearbeitung, zu einem Teil der Kerbe (N, N11-N13, N21, N22) von Nesting-Daten, in denen eine Form des Produkts (P) in einer das Werkstück (W) darstellenden Form angeordnet ist, als Teilbearbeitungspfad innerhalb eines Kerbenbildungsbearbeitungspfads zum Ausbilden der Kerbe (N, N11-N13, N21, N22) einen Öffnungspfad (OP) zum Schneiden in Richtung einer Innenseite des Produkts (P), wobei ein Liniensegment des Teils der Kerbe (N, N11-N13, N21, N22) im äußeren Umfangsendabschnitt ausgenommen ist, wobei sich der Öffnungspfad (OP) zur Außenseite des Produkts (P) hin öffnet, wobei ein Startpunkt des Öffnungspfads (OP) ein Endpunkt einer Annäherung (AP) ist, die an einer Position auf der Außenseite des Produkts (P) beginnt, wobei ein Startpunkt der Annäherung (AP) mit einem Durchgangsloch (PI) verbunden ist, das an einer Position auf der Außenseite des Produkts (P) ausgebildet ist, und wobei sich ein zur Außenseite des Produkts (P) erstreckender Auslauf (ES) mit einem Endpunkt des Öffnungspfads (OP) verbindet; und
Festlegen, zu den Nesting-Daten, innerhalb des Laserbearbeitungspfads, eines Außenumfangspfads (OU), der durch Verknüpfung eines ersten Außenumfangsbearbeitungspfads zum Schneiden des Liniensegments des Teils der Kerbe (N, N11-N13, N21, N22) im äußeren Umfangsendabschnitt, der ein verbleibender Teilbearbeitungspfad im Kerbenbildungsbearbeitungspfad ist, sowie eines zweiten Außenumfangsbearbeitungspfads zum Schneiden mindestens eines Teils eines anderen Liniensegments als des Teils der Kerbe (N, N11-N13, N21, N22) im äußeren Umfangsendabschnitt.

2. Das Verfahren zur Festlegung eines Laserbearbeitungspfads gemäß Anspruch 1, wobei
das Produkt (P) an seinem äußeren Umfangsendabschnitt eine oder mehrere Kerben (N, N11-N13, N21, N22) aufweist und
das Verfahren zur Festlegung eines Laserbearbeitungspfads ferner umfasst:
Festlegen, an dem Teil der Kerbe (N, N11-N13, N21, N22) der Nesting-Daten, als den Öffnungspfad (OP), einen einzigen Öffnungspfad (OP), der nicht mit einem Außenumfangsbearbeitungspfad zum Schneiden zumindest eines Teils eines Liniensegments verbunden ist, der sich von dem Teil der Kerbe (N, N11-N13, N21, N22) im äußeren Umfangsendabschnitt unterscheidet;
Festlegen, in den Nesting-Daten, als zweiten Außenumfangsbearbeitungspfad, eines Außenumfangsbearbeitungspfads zum Schneiden eines gesamten Liniensegments, mit Ausnahme des Teils der Kerbe (N, N11-N13, N21, N22) im äußeren Umfangsendabschnitt; und
Festlegen, in den Nesting-Daten, eines durchgehenden Außenumfangspfades (OU), der durch Verknüpfung des ersten Außenumfangsbearbeitungspfades jeder Kerbe (N, N11-N13, N21, N22) und des zweiten Außenumfangsbearbeitungspfades erhalten wird.

3. Das Verfahren zur Festlegung eines Laserbearbeitungspfads gemäß Anspruch 1, wobei
das Produkt (P) an seinem Außenumfangsendabschnitt eine Kerbe (N11) aufweist,
das Verfahren zur Festlegung eines Laserbearbeitungspfads ferner umfasst:
Festlegen, in den Nesting-Daten, als zweiten Außenumfangsbearbeitungspfad, eines Außenumfangsbearbeitungspfads zum Schneiden eines gesamten Liniensegments mit Ausnahme des Teils der Kerbe (N11) im Außenumfangsendabschnitt;
Festlegen, in den Nesting-Daten, eines durch Kopplung des zweiten Außenumfangsbearbeitungspfads und des ersten Außenumfangsbearbeitungspfads in dieser Reihenfolge erhaltenen durchgehenden Außenumfangspfads (OU); und
Festlegen, in den Nesting-Daten, eines durch Kopplung des Öffnungspfads (OP) und des Außenumfangspfads (OU) in dieser Reihenfolge erhaltenen durchgehenden Bearbeitungspfads.

4. Das Verfahren zur Festlegung eines Laserbearbeitungspfads gemäß Anspruch 1, wobei
das Produkt (P) eine erste und eine zweite Kerbe (N, N11-N13, N21, N22) aufweist, die an seinem äußeren Umfangsendabschnitt nebeneinander angeordnet sind, und
das Verfahren zur Festlegung eines Laserbearbeitungspfads ferner umfasst:
Festlegen, in den Nesting-Daten, als zweiten Außenumfangsbearbeitungspfad, eines Außenumfangsbearbeitungspfads zum Schneiden eines Liniensegments zwischen der ersten und der zweiten Kerbe (N, N11-N13, N21, N22), das einen Teil des äußeren Umfangsendabschnitts bildet;
Festlegen, in den Nesting-Daten, eines durchgehenden Außenumfangspfads (OU), der durch Verknüpfung des zweiten Außenumfangsbearbeitungspfads und des ersten Außenumfangsbearbeitungspfads im Kerbenbildungsbearbeitungspfad der zweiten Kerbe (N, N11-N13, N21, N22) in dieser Reihenfolge erhalten wird; und
Festlegen, in den Nesting-Daten, eines durchgehenden Bearbeitungspfads, der durch Verknüpfung des Öffnungspfads (OP) der ersten Kerbe (N, N11-N13, N21, N22) und des Außenumfangspfads (OU) in dieser Reihenfolge erhalten wird.

5. Das Verfahren zur Festlegung eines Laserbearbeitungspfads gemäß einem der Ansprüche 1 bis 4, weiter umfassend, wenn ein erster Eckabschnitt und ein zweiter Eckabschnitt am äußeren Umfangsendabschnitt des Teils der Kerbe (N, N11-N13, N21, N22) einander gegenüberliegen, ein erstes Liniensegment des äußeren Umfangsendabschnitts, das mit dem ersten Eckabschnitt verbunden ist, und ein zweites Liniensegment des äußeren Umfangsendabschnitts, das mit dem zweiten Eckabschnitt verbunden ist, nicht auf einer geraden Linie liegen und der zweite Eckabschnitt weiter von einem Bodenabschnitt der Kerbe (N, N11-N13, N21, N22) entfernt ist als der erste Eckabschnitt:
Festlegen, wenn ein Winkel, der zwischen einem dritten Liniensegment, das den ersten Eckabschnitt mit dem zweiten Eckabschnitt verbindet, und einer vom zweiten Eckabschnitt zum Bodenabschnitt gerichteten Seitenkante gebildet wird, gleich oder größer als ein vorbestimmter Winkel ist, des ersten Außenumfangsbearbeitungspfads zum dritten Liniensegment; und
Festlegen, wenn der Winkel zwischen dem dritten Liniensegment und der Seitenkante kleiner als der vorgegebene Winkel ist, des ersten Außenumfangsbearbeitungspfads entlang eines vierten Liniensegments, das sich vom ersten Eckabschnitt zur Seitenkante erstreckt, wobei das vierte Liniensegment durch Verlängerung des ersten Liniensegments vom ersten Eckabschnitt zur Seitenkante erhalten wird.

6. Laserbearbeitungsverfahren, **gekennzeichnet durch** die folgenden Schritte:
beim Ausschneiden eines Produkts (P), das an einem äußeren Umfangsendabschnitt davon eine Kerbe (N, N11-N13, N21, N22) aufweist, durch Laserbearbeitung aus einem von einer Halterung (312) gehaltenen Werkstück (W), ein Ausbilden eines Durchgangslochs (PI) an einer Stelle auf der Außenseite des Produkts (P) mit einem Laserstrahl;
Bilden einer mit dem Durchgangsloch (PI) verbundenen Annäherung (AP) in Richtung des äußeren Umfangsendabschnitts mittels eines Laserstrahls;
Bestrahlen des Werkstücks (W) mit einem Laserstrahl entlang eines Öffnungspfads (OP) als Teilbearbeitungspfad innerhalb eines Kerbenbildungsbearbeitungspfads zur Bildung der Kerbe (N, N11-N13, N21, N22), wobei ein Startpunkt des Öffnungspfads (OP) ein Endpunkt der Annäherung (AP) ist, wodurch der Öffnungspfad (OP) in das Werkstück (W) eingeschnitten wird, wobei der Öffnungspfad (OP) zum Schneiden zu einer Innenseite des Produkts (P) vorgesehen ist, mit Ausnahme eines Liniensegments eines Teils der Kerbe (N, N11-N13, N21, N22) im äußeren Umfangsendabschnitt, wobei sich der Öffnungspfad (OP) zur Außenseite des Produkts (P) hin öffnet;
Ausbilden eines Auslaufs (ES), der mit einem Endpunkt des Öffnungspfads (OP) verbunden ist und sich zur Außenseite des Produkts (P) erstreckt, mittels eines Laserstrahls; und
Bestrahlen des Werkstücks (W), vor oder nach dem Schneiden des Öffnungspfads (OP) im Werkstück (W), mit einem Laserstrahl entlang eines Außenumfangspfads (OU), der durch Verknüpfung eines ersten Außenumfangsbearbeitungspfads und eines zweiten Außenumfangsbearbeitungspfads erhalten wird, wodurch der Außenumfangspfad (OU) im Werkstück (W) geschnitten wird, wobei der erste Außenumfangsbearbeitungspfad zum Schneiden des Liniensegments des Teils der Kerbe (N, N11-N13, N21, N22) im äußeren Umfangsendabschnitt, der ein verbleibender Teilbearbeitungspfad des Kerbenbildungsbearbeitungspfads ist, vorgesehen ist, wobei der zweite Außenumfangsbearbeitungspfad zum Schneiden mindestens eines Teils eines Liniensegments vorgesehen ist, das sich von dem Teil der Kerbe (N, N11-N13, N21, N22) im äußeren Umfangsendabschnitt unterscheidet.

7. Das Laserbearbeitungsverfahren gemäß Anspruch 6, wobei
das Produkt (P) an seinem äußeren Umfangsendabschnitt eine oder mehrere Kerben (N, N11-N13, N21, N22) aufweist und
das Laserbearbeitungsverfahren ferner umfasst:
Bestrahlen des Werkstücks (W) mit einem Laserstrahl entlang des Öffnungspfads (OP), der entsprechend jeder Kerbe (N, N11-N13, N21, N22) angelegt ist, wodurch ausschließlich der Öffnungspfad (OP) im Werkstück (W) geschnitten wird; und
Bestrahlen, nach dem Schneiden des Öffnungspfads (OP) in das Werkstück (W), des Werkstücks (W) mit einem Laserstrahl entlang eines Außenumfangspfads (OU), der durch Verknüpfung des ersten Außenumfangsbearbeitungspfads und, als zweiten Außenumfangsbearbeitungspfad, eines Bearbeitungspfads zum Schneiden eines gesamten Liniensegments, das sich von dem Teil der Kerbe (N, N11-N13, N21, N22) im äußeren Umfangsendbereich unterscheidet, erhalten wird, wodurch das Produkt (P) aus dem Werkstück (W) ausgeschnitten wird.

8. Das Laserbearbeitungsverfahren gemäß Anspruch 6, wobei
das Produkt (P) an seinem äußeren Umfangsendabschnitt eine Kerbe (N11) aufweist und
das Laserbearbeitungsverfahren ferner umfasst:
Bestrahlen des Werkstücks (W) mit einem Laserstrahl entlang des Öffnungspfads (OP), wodurch der Öffnungspfad (OP) in das Werkstück (W) geschnitten wird; und
Bestrahlen des Werkstücks (W), kontinuierlich mit dem Schneiden des Öffnungspfads (OP), mit einem Laserstrahl entlang eines Außenumfangspfads (OU), der dadurch erhalten wird, dass als zweiter Außenumfangsbearbeitungspfad ein gesamtes Liniensegment mit Ausnahme des Teils der Kerbe (N11) im äußeren Umfangsendabschnitt und der erste Außenumfangsbearbeitungspfad in dieser Reihenfolge miteinander verbunden werden, wodurch das Produkt (P) aus dem Werkstück (W) ausgeschnitten wird.

9. Das Laserbearbeitungsverfahren gemäß Anspruch 6, wobei, wenn das Produkt (P) mindestens zwei Kerben (N, N11-N13, N21, N22) an seinem äußeren Umfangsendabschnitt aufweist und zwei Kerben (N, N11-N13, N21, N22) in den mindestens zwei Kerben (N, N11-N13, N21, N22) nebeneinander liegen, durch eine erste und eine zweite Kerbe (N, N11-N13, N21, N22) repräsentiert werden, das Laserbearbeitungsverfahren ferner umfasst:
Bestrahlen des Werkstücks (W) mit einem Laserstrahl entlang eines ersten Öffnungspfads (OP), der entsprechend der ersten Kerbe (N, N11-N13, N21, N22) angelegt ist, wodurch der erste Öffnungspfad (OP) in das Werkstück (W) geschnitten wird;
Bestrahlen des Werkstücks (W) mit einem Laserstrahl, kontinuierlich mit dem Schneiden des ersten Öffnungspfads (OP), entlang eines Außenumfangsbearbeitungspfads, der als zweiter Außenumfangsbearbeitungspfad dient, zum Schneiden eines Liniensegments zwischen der ersten Kerbe (N, N11-N13, N21, N22) und der zweiten Kerbe (N, N11-N13, N21, N22), welche Teil des äußeren Umfangsendabschnitts ist, wodurch der zweite Außenumfangsbearbeitungsweg in das Werkstück (W) geschnitten wird; und
Bestrahlen des Werkstücks (W), kontinuierlich zu dem Schneiden des zweiten Außenumfangsbearbeitungspfads, mit einem Laserstrahl entlang des ersten Außenumfangsbearbeitungspfads im Kerbenbildungsbearbeitungspfad der zweiten Kerbe (N, N11-N13, N21, N22), wodurch der erste Außenumfangsbearbeitungspfad der zweiten Kerbe (N, N11-N13, N21, N22) in das Werkstück (W) geschnitten wird.

10. Vorrichtung zur Festlegung eines Laserbearbeitungspfads, **gekennzeichnet durch** umfassend:
eine zentrale Verarbeitungseinheit (11); und
eine Speichereinheit (12), in der ein Programm zur Festlegung eines Laserbearbeitungspfads gespeichert ist, um in Nesting-Daten, in denen eine Form eines Produkts (P) mit einer Kerbe (N, N11-N13, N21, N22) an einem äußeren Umfangsendabschnitt davon in einer Form angeordnet ist, die ein Werkstück (W) angibt, einen Laserbearbeitungspfad zum Ausschneiden des Produkts (P) aus dem Werkstück (W) mittels Laserbearbeitung festzulegen, wobei
die zentrale Verarbeitungseinheit (11) konfiguriert ist, das Programm zur Festlegung eines Laserbearbeitungspfads auszuführen, um:
innerhalb des Laserbearbeitungspfads zu einem Teil der Kerbe (N, N11-N13, N21, N22) der Nesting-Daten als Teilbearbeitungspfad in einem Kerbenbildungsbearbeitungspfad zur Bildung der Kerbe (N, N11-N13, N21, N22) einen Öffnungspfad (OP) zum Schneiden in Richtung einer Innenseite des Produkts (P) festzulegen, wobei ein Liniensegment des Teils der Kerbe (N, N11-N13, N21, N22) im äußeren Umfangsendabschnitt ausgenommen ist, wobei sich der Öffnungspfad (OP) zur Außenseite des Produkts (P) hin öffnet, wobei ein Startpunkt des Öffnungspfads (OP) ein Endpunkt einer Annäherung (AP) ist, die an einer Position auf der Außenseite des Produkts (P) beginnt, wobei ein Startpunkt der Annäherung (AP) mit einem Durchgangsloch (PI) verbunden ist, das an einer Position auf der Außenseite des Produkts (P) ausgebildet ist, und wobei ein sich zur Außenseite des Produkts (P) erstreckender Auslauf (ES) mit einem Endpunkt des Öffnungspfads (OP) verbunden ist; und
in den Nesting-Daten innerhalb des Laserbearbeitungspfads einen Außenumfangspfad (OU) festzulegen, der durch Kopplung eines ersten Außenumfangsbearbeitungspfads und eines zweiten Außenumfangsbearbeitungspfads erhalten wird, wobei der erste Außenumfangsbearbeitungspfad zum Schneiden des Liniensegments des Teils der Kerbe (N, N11-N13, N21, N22) im äußeren Umfangsendabschnitt, der ein verbleibender Teilbearbeitungspfad des Kerbenbildungsbearbeitungspfads ist, vorgesehen ist, wobei der zweite Außenumfangsbearbeitungspfad zum Schneiden mindestens eines Teils eines Liniensegments vorgesehen ist, das sich von dem Teil der Kerbe (N, N11-N13, N21, N22) im äußeren Umfangsendabschnitt unterscheidet.

## Revendications

1. Procédé de conception d'un parcours de traitement laser, **caractérisé en ce qu'**il comprend :
la conception, dans un parcours de traitement laser destiné à découper, par traitement laser, un produit (P) comportant une encoche (N, N11-N13, N21, N22) au niveau d'une portion d'extrémité périphérique externe de celui-ci, à partir d'une pièce à usiner (W), sur une partie de l'encoche (N, N11-N13, N21, N22) de données d'imbrication dans lesquelles une forme du produit (P) est disposée selon une forme représentant la pièce à usiner (W), en tant que parcours de traitement partiel dans un parcours de traitement de formation d'encoche destiné à former l'encoche (N, N11-N13, N21, N22), d'un parcours ouvert (OP) destiné à découper sur un côté inter du produit (P), à l'exclusion d'un segment de ligne de la partie de l'encoche (N, N11-N13, N21, N22) dans la portion d'extrémité périphérique externe, le parcours ouvert (OP) s'ouvrant vers un côté externe du produit (P), un point de départ du parcours ouvert (OP) étant un point d'extrémité d'une voie (AP) qui commence à une position située sur le côté externe du produit (P), un point de départ de la voie (AP) étant relié à un trou percé (PI) qui est formé à une position située sur le côté externe du produit (P), et une sortie (ES) s'étendant vers le côté externe du produit (P) étant reliée à un point d'extrémité du parcours ouvert (OP) ; et
la conception, sur les données d'imbrication, dans le parcours de traitement laser, d'un parcours périphérique externe (OU) obtenu en couplant un premier parcours de traitement périphérique externe destiné à découper le segment de ligne de la partie de l'encoche (N, N11-N13, N21, N22) située dans la portion d'extrémité périphérique externe, qui est un parcours de traitement partiel restant dans le parcours de traitement de formation d'encoche, et un second parcours de traitement périphérique externe destiné à découper au moins une partie d'un segment de ligne autre que la partie de l'encoche (N, N11-N13, N21, N22) dans la portion d'extrémité périphérique externe.

2. Procédé de conception d'un parcours de traitement laser selon la revendication 1, dans lequel
le produit (P) comporte une ou plusieurs encoches (N, N11-N13, N21, N22) au niveau de la portion d'extrémité périphérique externe de celui-ci, et
le procédé de conception d'un parcours de traitement laser comprend en outre :
la conception, sur la partie de l'encoche (N, N11-N13, N21, N22) des données d'imbrication, en tant que parcours ouvert (OP), d'un parcours ouvert (OP) unique qui n'est pas couplé à un parcours de traitement périphérique externe destiné à découper au moins une partie d'un segment de ligne autre que la partie de l'encoche (N, N11-N13, N21, N22) dans la portion d'extrémité périphérique externe ;
la conception, sur les données d'imbrication, en tant que second parcours de traitement périphérique externe, d'un parcours de traitement périphérique externe destiné à découper l'intégralité d'un segment de ligne autre que la partie de l'encoche (N, N11-N13, N21, N22) dans la portion d'extrémité périphérique externe ; et
la conception, sur les données d'imbrication, d'un parcours périphérique externe (OU) continu obtenu en couplant le premier parcours de traitement périphérique externe de chaque encoche (N, N11-N13, N21, N22) et le second parcours de traitement périphérique externe.

3. Procédé de conception d'un parcours de traitement laser selon la revendication 1, dans lequel
le produit (P) comporte une encoche (N11) au niveau de la portion d'extrémité périphérique externe de celui-ci,
le procédé de conception d'un parcours de traitement laser comprend en outre :
la conception, sur les données d'imbrication, en tant que second parcours de traitement périphérique externe, d'un parcours de traitement périphérique externe destiné à découper l'intégralité d'un segment de ligne autre que la partie de l'encoche (N11) dans la portion d'extrémité périphérique externe ;
la conception, sur les données d'imbrication, d'un parcours périphérique externe (OU) continu obtenu en couplant, dans cet ordre, le second parcours de traitement périphérique externe et le premier parcours de traitement périphérique externe ; et
la conception, sur les données d'imbrication, d'un parcours de traitement continu obtenu en couplant, dans cet ordre, le parcours ouvert (OP) et le parcours périphérique externe (OU).

4. Procédé de conception d'un parcours de traitement laser selon la revendication 1, dans lequel
le produit (P) comporte des première et seconde encoches (N, N11-N13, N21, N22) adjacentes l'une à l'autre au niveau de la portion d'extrémité périphérique externe de celui-ci, et
le procédé de conception d'un parcours de traitement laser comprend en outre :
la conception, sur les données d'imbrication, en tant que second parcours de traitement périphérique externe, d'un parcours de traitement périphérique externe destiné à découper un segment de ligne situé entre la première encoche et la seconde encoche (N, N11-N13, N21, N22), qui est une partie de la portion d'extrémité périphérique externe ;
la conception, sur les données d'imbrication, d'un parcours périphérique externe (OU) continu obtenu en couplant, dans cet ordre, le second parcours de traitement périphérique externe et le premier parcours de traitement périphérique externe dans le parcours de traitement de formation d'encoche de la seconde encoche (N, N11-N13, N21, N22) ; et
la conception, sur les données d'imbrication, d'un parcours de traitement continu obtenu en couplant, dans cet ordre, le parcours ouvert (OP) de la première encoche (N, N11-N13, N21, N22) et le parcours périphérique externe (OU).

5. Procédé de conception d'un parcours de traitement laser selon l'une quelconque des revendications 1 à 4, comprenant en outre, lorsque une première portion de coin et une seconde portion de coin sont opposées l'une à l'autre sur la portion d'extrémité périphérique externe de la partie de l'encoche (N, N11-N13, N21, N22), un premier segment de ligne de la portion d'extrémité périphérique externe couplé à la première portion de coin et un deuxième segment de ligne de la portion d'extrémité périphérique externe couplé à la seconde portion de coin sont absents sur une première ligne droite, et la seconde portion de coin est plus éloignée d'une portion de fond de l'encoche (N, N11-N13, N21, N22) que la première portion de coin :
la conception, lorsqu'un angle formé entre un troisième segment de ligne qui couple la première portion de coin et la seconde portion de coin, et un côté latéral orienté de la seconde portion de coin vers la portion de fond, est égal ou supérieur à un angle prédéterminé, du premier parcours de traitement périphérique externe sur le troisième segment de ligne ; et
la conception, lorsque l'angle formé entre le troisième segment de ligne et le côté latéral est inférieur à l'angle prédéterminé, du premier parcours de traitement périphérique externe sur un quatrième segment de ligne s'étendant de la première portion de coin jusqu'au côté latéral, le quatrième segment de ligne étant obtenu en prolongeant le premier segment de ligne de la première portion de coin jusqu'au côté latéral.

6. Procédé de traitement laser, comprenant :
la découpe, par traitement laser, d'un produit (P) comportant une encoche (N, N11-N13, N21, N22) au niveau d'une portion d'extrémité périphérique externe de celui-ci, à partir d'une pièce à usiner (W) supportée par un patin (312),
le procédé étant **caractérisé en ce que** la découpe de l'encoche comporte :
la formation d'un trou percé (PI) à une position située sur un côté externe du produit (P) avec un faisceau laser ;
la formation d'une voie (AP) reliée au trou percé (PI) vers la portion d'extrémité périphérique externe avec un faisceau laser ;
l'irradiation de la pièce à usiner (W) avec un faisceau laser le long d'un parcours ouvert (OP) en tant que parcours de traitement partiel dans un parcours de traitement de formation d'encoche destiné à former l'encoche (N, N11-N13, N21, N22), un point de départ du parcours ouvert (OP) étant un point d'extrémité de la voie (AP), de manière à découper le parcours ouvert (OP) dans la pièce à usiner (W), le parcours ouvert (OP) étant prévu pour découper sur un côté interne du produit (P), à l'exclusion d'un segment de ligne d'une partie de l'encoche (N, N11-N13, N21, N22) dans la portion d'extrémité périphérique externe, le parcours ouvert (OP) s'ouvrant vers un côté externe du produit (P) ;
la formation d'une sortie (ES) reliée à un point d'extrémité du parcours ouvert (OP) et s'étendant vers le côté externe du produit (P) avec un faisceau laser ; et
l'irradiation, avant ou après la découpe du parcours ouvert (OP) dans la pièce à usiner (W), de la pièce à usiner (W) avec un faisceau laser le long d'un parcours périphérique externe (OU) obtenu en couplant un premier parcours de traitement périphérique externe et un second parcours de traitement périphérique externe, de manière à découper le parcours périphérique externe (OU) dans la pièce à usiner (W), le premier parcours de traitement de périphérique externe étant prévu pour découper le segment de ligne de la partie de l'encoche (N, N11-N13, N21, N22) dans la portion d'extrémité périphérique externe, qui est un parcours de traitement partiel restant dans le parcours de traitement de formation d'encoche, le second parcours de traitement périphérique externe étant prévu pour découper au moins une partie d'un segment de ligne autre que la partie de l'encoche (N, N11-N13, N21, N22) dans la portion d'extrémité périphérique externe.

7. Procédé de traitement laser selon la revendication 6, dans lequel
le produit (P) comporte une ou plusieurs encoches (N, N11-N13, N21, N22) au niveau de la portion d'extrémité périphérique externe de celui-ci, et
le procédé de traitement laser comprend en outre :
l'irradiation de la pièce à usiner (W) avec un faisceau laser le long du parcours ouvert (OP) conçu de manière à correspondre à chaque encoche (N, N11-N13, N21, N22), de manière à découper uniquement le parcours ouvert (OP) seul dans la pièce à usiner (W) ; et
l'irradiation, après la découpe du parcours ouvert (OP) dans la pièce à usiner (W), de la pièce à usiner (W) avec un faisceau laser le long d'un parcours périphérique externe (OU) obtenu en couplant le premier parcours de traitement périphérique externe et, en tant que second parcours de traitement périphérique externe, un parcours de traitement destiné à découper l'intégralité d'un segment de ligne autre que la partie de l'encoche (N, N11-N13, N21, N22) dans la portion d'extrémité périphérique externe, de manière à découper le produit (P) à partir de la pièce à usiner (W).

8. Procédé de traitement laser selon la revendication 6, dans lequel
le produit (P) comporte une encoche (N11) au niveau de la portion d'extrémité périphérique externe de celui-ci, et le procédé de traitement laser comprend en outre :
l'irradiation de la pièce à usiner (W) avec un faisceau laser le long du parcours ouvert (OP), de manière à découper le parcours ouvert (OP) dans la pièce à usiner (W) ; et
l'irradiation, de manière continue avec la découpe du parcours ouvert (OP), de la pièce à usiner (W) avec un faisceau laser le long d'un parcours périphérique externe (OU) obtenu en couplant, dans cet ordre, en tant que second parcours de traitement périphérique externe, l'intégralité d'un segment de ligne autre que la partie de l'encoche (N11) dans la portion d'extrémité périphérique externe, et le premier parcours de traitement périphérique externe, de manière à découper le produit (P) à partir de la pièce à usiner (W).

9. Procédé de traitement laser selon la revendication 6, dans lequel, lorsque le produit (P) comporte au moins deux encoches (N, N11-N13, N21, N22) au niveau de la portion d'extrémité périphérique externe de celui-ci, et deux encoches (N, N11-N13, N21, N22) adjacentes l'une à l'autre parmi les au moins deux encoches (N, N11-N13, N21, N22) sont représentées par des première et seconde encoches (N, N11-N13, N21, N22), le procédé de traitement laser comprend en outre :
l'irradiation de la pièce à usiner (W) avec un faisceau laser le long d'un premier parcours ouvert (OP) en tant que parcours ouvert (OP) conçu de manière à correspondre à la première encoche (N, N11-N13, N21, N22), de manière à découper le premier parcours ouvert (OP) dans la pièce à usiner (W) ;
l'irradiation, de manière continue avec la découpe du premier parcours ouvert (OP), de la pièce à usiner (W) avec un faisceau laser le long, en tant que second parcours de traitement périphérique externe, d'un parcours de traitement périphérique externe destiné à découper un segment de ligne situé entre la première encoche (N, N11-N13, N21, N22) et la seconde encoche (N, N11-N13, N21, N22), qui est une partie de la portion d'extrémité périphérique externe, de manière à découper le second parcours de traitement périphérique externe dans la pièce à usiner (W) ; et
l'irradiation, de manière continue avec la découpe du second parcours de traitement périphérique externe, de la pièce à usiner (W) avec un faisceau laser le long du premier parcours de traitement périphérique externe dans le parcours de traitement de formation d'encoche de la seconde encoche (N, N11-N13, N21, N22), de manière à découper le premier parcours de traitement périphérique externe de la seconde encoche (N, N11-N13, N21, N22) dans la pièce à usiner (W).

10. Dispositif de conception d'un parcours de traitement laser comprenant :
une unité centrale de traitement (11) ; et
une unité de stockage (12) dans laquelle est stocké un programme de conception d'un parcours de traitement laser destiné à concevoir, sur des données d'imbrication dans lesquelles une forme d'un produit (P) comportant une encoche (N, N11-N13, N21, N22) au niveau d'une portion d'extrémité périphérique externe de celui-ci est disposée selon une forme représentant une pièce à usiner (W), un parcours de traitement laser destiné à découper le produit (P) à partir de la pièce à usiner (W) par traitement laser, **caractérisé en ce que** :
l'unité centrale de traitement (11) est configurée pour exécuter le programme de conception d'un parcours de traitement laser afin de :
concevoir, dans le parcours de traitement laser, sur une partie de l'encoche (N, N11-N13, N21, N22) des données d'imbrication, en tant que parcours de traitement partiel dans un parcours de traitement de formation d'encoche destiné à former l'encoche (N, N11-N13, N21, N22), un parcours ouvert (OP) destiné à découper sur un côté interne du produit (P), à l'exclusion d'un segment de ligne de la partie de l'encoche (N, N11-N13, N21, N22) situé dans la portion d'extrémité périphérique externe, le parcours ouvert (OP) s'ouvrant vers un côté externe du produit (P), un point de départ du parcours ouvert (OP) étant un point d'extrémité d'une voie (AP) qui commence à une position située sur le côté externe du produit (P), un point de départ de la voie (AP) étant relié à un trou percé (PI) qui est formé à une position sur le côté externe du produit (P), et une sortie (ES) s'étendant vers le côté externe du produit (P) étant reliée à un point d'extrémité du parcours ouvert (OP) ; et
concevoir, sur les données d'imbrication, dans le parcours de traitement laser, un parcours périphérique externe (OU) obtenu en couplant un premier parcours de traitement périphérique externe et un second parcours de traitement périphérique externe, le premier parcours de traitement périphérique externe étant prévu pour découper le segment de ligne de la partie de l'encoche (N, N11-N13, N21, N22) dans la portion d'extrémité périphérique externe, qui est un parcours de traitement partiel restant dans le parcours de traitement de formation d'encoche, le second parcours de traitement périphérique externe étant prévu pour découper au moins une partie d'un segment de ligne autre que la partie de l'encoche (N, N11-N13, N21, N22) dans la portion d'extrémité périphérique externe.
